# EUROPÄISCHE PATENTSCHRIFT

(11) **EP 2 131 953 B1**
(45) Veröffentlichungstag und Bekanntmachung des Hinweises auf die Patenterteilung: **07.11.2018**
(21) Anmeldenummer: 08707070.2
(22) Anmeldetag: 16.01.2008
(51) Int. Cl.: B01J 3/04, B01J 19/24, C10G 1/00, C10G 1/08

(54) **HYDROTHERMALE KARBONISIERUNG VON BIOMASSE**
HYDROTHERMAL CARBONIZATION OF BIOMASS
CARBONISATION HYDROTHERMIQUE DE BIOMASSE

(30) Priorität: 08.02.2007 DE 102007007774
(43) Veröffentlichungstag der Anmeldung: 16.12.2009
(73) Patentinhaber: GRENOL IP GmbH, 40882 Ratingen (DE)
(72) Erfinder: HOFER, Lothar, 42489 Wülfrath (DE)
(74) Vertreter: Ring & Weisbrodt
(86) Internationale Anmeldenummer: PCT/EP2008/000304
(87) Internationale Veröffentlichungsnummer: WO 2008/095589

(56) Entgegenhaltungen:
- WO-A-2006/117002
- DE-A1- 19 631 201
- GB-A- 1 186 609
- US-A- 2 177 557

## Beschreibung

Die vorliegende Erfindung betrifft ein Verfahren und eine Vorrichtung zur hydrothermalen Karbonisierung von Biomasse, wobei Biomasse mit Wasser und wenigstens einem Katalysator in einem Druckbehälter durch Temperatur- und/oder Druckerhöhung in Stoffe wie Kohle, Öl und/oder dergleichen artverwandte Stoffe umgewandelt wird.

Der Begriff Biomasse umfasst im Sinne der vorliegenden Erfindung sämtliche lebenden, toten und/oder zersetzten Organismen. Dazu zählen neben Pflanzen insbesondere auch Abfall- und/oder Restholz, Stroh, Gras, Dung, Laub, Klärschlamm und/oder organischer Hausmüll. Die Biomasse kann dabei in unterschiedlichen Zusammensetzungen, Qualitäten, Größen und/oder dergleichen Verwendung finden, je nach Bedarf und gewünschtem Umwandlungsprodukt Verwendung finden.

Bisher wird bei der hydrothermalen Karbonisierung ein Druckbehälter mit im wesentlichen aus pflanzlichen Produkten bestehender Biomasse, Wasser und einer geringen Menge eines Katalysators, insbesondere Zitronensäure, gefüllt. Anschließend wird der Druckbehälter verschlossen und unter Temperatur- und Druckerhöhung die Umwandlung beziehungsweise Umsetzung der Biomasse durchgeführt. Die dabei ablaufende Reaktion ist exotherm, das heißt es wird Energie in Form von Wärme und/oder Licht abgegeben. Die zeitliche Dauer dieses Umwandlungsprozesses hängt von dem angestrebten Zustand des Umwandlungsprodukts ab und liegt bisher beispielsweise für die Umwandlung von Biomasse in Kohle in einem Zeitbereich von etwa zwölf Stunden. Dabei wird der Druckbehälter auf einer Temperatur von etwa 180 Grad Celsius bis etwa 200 Grad Celsius gehalten. Anschließend wird der Druckbehälter geöffnet und das Umwandlungsprodukt - bei einer Umwandlung von Biomasse in Kohle kleine auf dem Wasser schwimmende Kohlepartikel - dem Druckbehälter entnommen.

Nachteilig bei der bisher bekannten hydrothermalen Karbonisierung ist neben der relativ großen zeitlichen Dauer des Umwandlungsprozesses insbesondere die diskontinuierliche Prozessführung, bei der ein Druckbehälter zunächst gefüllt wird, der gefüllte Druckbehälter dann druckdicht verschlossen wird, anschließend in dem Druckbehälter die Umwandlungsreaktionen ablaufen, der Druckbehälter danach geöffnet wird und schließlich der geöffnete Druckbehälter geleert wird beziehungsweise das Umwandlungsprodukt aus dem Druckbehälter entnommen wird. Darüber hinaus sind sowohl der maschinen- und/oder anlagentechnische Aufwand als auch der Bedien- und Personalaufwand bisher erheblich. Ferner ist mit der bisherigen diskontinuierlichen Prozessführung ein effektiver und günstiger industrieller Einsatz der hydrothermalen Karbonisierung zur Stoffgewinnung nicht realisierbar.

Die GB 1 186 609 A offenbart ein Verfahren und eine Vorrichtung für chemische Reaktionsprozesse, insbesondere Polymerisationsprozesse mit katalytischen Reaktionen. Dabei strömt ein reaktanter Stoff, vorliegend Ethylen bzw. Ethen in gasförmigem Zustand mittels Druckbeaufschlagung durch eine mehrfach gebogene Rohrleitung, welche als Reaktorraum dient. Die Rohrleitung weist ein steuerbares Einlassventil und ein steuerbares Auslassventil auf. Die Rohrleitung selbst ist durch einen Druckbehälter geführt. Der Polymerisationsprozess soll bei dem Verfahren gemäß der GB 1 186 609 A bei Temperaturen in einem Bereich zwischen 141°C und 324°C und bei einem Druck in einem Bereich von mindestens 70 bar bis 140 bar in der Rohrleitung erfolgen. Während des Polymerisationsprozesses soll dem Ethylen bzw. Ethen in der Rohrleitung ein Katalysator, insbesondere Alkylaluminium, Triethylaluminium als Initiator zuführbar sein.

Die DE 196 31 201 A1 offenbart eine Vorrichtung und ein Verfahren zur Umwandlung von organischem Material biologischen Ursprungs in flüssige, feste oder gasförmige Brennstoffe und Chemierohstoffe unter Druck- und Temperaturerhöhung. Dabei wird organisches Material biologischen Ursprungs, in erster Linie biologische Rest- und Abfallstoffe mit einem hohen Wassergehalt, mit Wasser und zur Unterstützung des Reaktionsprozesses mit Katalysatoren durch eine Rohrleitung transportiert, welche von einem Zuführrohr und sich daran anschließenden, spiral- oder
schleifenförmig angeordneten Rohren gebildet wird. Die spiral- oder schleifenförmig angeordneten Rohre sind aus einem mikrowellendurchlässigen Material, beispielsweise Quarzglas, Borosilikatglas oder einem anderen nichtmetallischen Werkstoff, in einer Druckkammer angeordnet und dabei in der Druckkammer einer Mikrowellenstrahlung aussetzbar. Mittels der Mikrowellenstrahlung soll sich in den spiral- oder schleifenförmig angeordneten Rohren aus einem mikrowellendurchlässigem Material befindendes organisches Material biologischen Ursprungs auf Temperaturen zwischen 150°C und 800°C erwärmt werden. Gleichzeitig soll in der Druckkammer ein Druck von 50 bar bis 500 bar erzeugt werden. Dabei soll das in dem organischen Material biologischen Ursprungs vorhandene Wasser als Transportmittel für das Reaktionsgut fungieren. Das organische Material biologischen Ursprungs wird aus einem Behälter mittels einer Hochdruckpumpe über einen Durchflussregler mit einem definierten Volumenstrom in die Rohrleitung gefördert. Ferner soll das Reaktionsgut kontinuierlich durch die Zone der Mikrowellenbeaufschlagung, vorliegend also die spiral- oder schleifenförmig angeordneten Rohre aus einem mikrowellendurchlässigem Material, bewegt werden. Die Figur der DE 196 31 201 A1 zeigt ein sich an die spiral- oder schleifenförmig angeordneten Rohre anschließendes Abführrohr, an welches außerhalb des Druckbehälters ein Ventil und eine weitere Rohrleitung als Reaktionsraum angeschlossen sind.

Die WO 2006/117002 A2 offenbart ein Verfahren und eine Vorrichtung zur Umwandlung von organischem Material biologischen Ursprungs in Kohlenwasserstoffe und deren Produkte unter Druck- und Temperaturerhöhung. Dabei soll sich in einer Flüssigkeit befindendes organisches Material biologischen Ursprungs, insbesondere Klärschlämme oder Abfälle mit einem Druck über 225 bar beaufschlagt werden, in Anwesenheit eines homogenen Katalysators, insbesondere Kalium und/oder Natrium, auf Temperaturen über 200°C erhitzt werden und anschließend mit einem heterogenen Katalysator, insbesondere Zirkon und/oder Titan in Kontakt gebracht werden. Der heterogene Katalysator wird von bzw. mit einem rohrförmigen Festbettreaktor bereitgestellt. Bei der WO 20061117002 A2 erfolgt der Umwandlungsprozess damit in wenigstens zwei Stufen bzw. Schritten. Zunächst wird Biomasse mit Wasser und einem homogenen Katalysator (Kalium und/oder Natrium) mittels einer Pumpe unter Druck und mittels einer Heizeinrichtung erhitzt. Anschließend wird der so vorbereitete

Massenstrom in einem rohrförmigen Festbettreaktor einem heterogenen Katalysator (Zirkon und/oder Titan) zugeführt. Nach Kontakt mit dem heterogenen Katalysator (Zirkon und/oder Titan) soll der Massenstrom die umgewandelten Kohlenwasserstoffe enthalten.

Die US 2,177,557 offenbart ein Verfahren und eine Vorrichtung zur Umwandlung von holzhaltigen Materialien in Alkohole, Ketone, Öle und Salze organischer Säuren. Dabei wird das holzhaltige Material zusammen mit Wasser und Calciumhydroxid in einem Druckbehälter bzw. Autoklaven bei einem oberhalb des Sättigungsdampfdrucks liegenden Druck auf Temperaturen in einem Bereich zwischen 220°C und 360°C erhitzt. Die US 2,177,557 befasst sich insofern mit einer speziellen Lösung der sogenannten Holzverzuckerung. Der in der Figur der D4 symbolisch dargestellte Autoklave zeigt eine Rohrleitung mit im Wesentlichen S-förmiger Biegung. Der Rohrleitung des Autoklaven wird eine Mischung aus holzhaltigem Material, Wasser und Calciumhydroxid über eine Pumpe zugeführt. Über eine Empfangsschleuse ist das umgewandelte Material aus der Rohrleitung entnehmbar.

Der vorliegenden Erfindung liegt in Anbetracht des Standes der Technik die Aufgabe zugrunde, die hydrothermale Karbonisierung von Biomasse zu verbessern, insbesondere hinsichtlich der zeitlichen Dauer des Umwandlungsprozesses als auch hinsichtlich der Art und Weise der Prozessführung.

Zur technischen Lösung dieser Aufgabe wird mit der vorliegenden Erfindung ein Verfahren
mit den Merkmalen des Anspruchs 1 und eine Vorrichtung mit den Merkmalen des Anspruchs 12 vorgeschlagen. Vorteilhafte Ausgestaltungen des Verfahrens sind in den Unteransprüchen 2 bis 11 gekennzeichnet. Vorteilhafte Ausgestaltungen der Vorrichtung sind in den Unteransprüchen 13 bis 20 gekennzeichnet. Der Schutzumfang wird durch die Ansprüche bestimmt.

Durch die erfindungsgemäße Ausgestaltung wird eine kontinuierliche Prozessführung realisiert. Durch die erfindungsgemäße Ausbildung des Druckbehälters durch eine Rohrleitung werden quasi unendlich viele hintereinander kaskadiert angeordnete und miteinander verbundende Druckbehälter realisiert. Insgesamt wird so vorteilhafterweise eine kontinuierliche Prozessführung ermöglicht, was insbesondere vor dem Hintergrund eines effektiven und günstigen industriellen Einsatzes der hydrothermalen Karbonisierung zur Stoffgewinnung besonders vorteilhaft ist. Ferner ist bei der erfindungsgemäßen Ausgestaltung der maschinen- und/oder anlagentechnische Aufwand reduziert, insbesondere da Pumpen, Absperrorgane und dergleichen Einrichtungen, die ansonsten bei kaskadiert hintereinander angeordneten und strömungstechnisch miteinander verbundenen Druckbehältern anfallen würden, entfallen, zumindest aber in deutlich geringerem Umfang benötigt werden.

Das erfindungsgemäße Verfahren erlaubt eine kontinuierliche Zuführung von Biomasse, Wasser und/oder wenigstens einem Katalysator. Die Zuführung von Biomasse, Wasser und/oder wenigstens einem Katalysator zur Füllung des Druckbehälters kann dabei parallel erfolgen, so dass Biomasse, Wasser und/oder Katalysator einzeln zugeführt werden. Dementsprechend sind eine separate Zuführung von Biomasse, eine separate Zuführung von Wasser und/oder eine separate Zuführung von Katalysator vorgesehen. Vorteilhafterweise wird das Mischungsverhältnis der Komponenten Biomasse, Wasser und/oder wenigstens einem Katalysator über ein entsprechendes Steuerungssystem durchgeführt.

Die Temperatur- und/oder Druckverhältnisse in dem Druckbehälter werden derart gesteuert, dass dem Druckbehälter zugeführtes Füllgut aus Biomasse, Wasser und Katalysator definiert in der beziehungsweise durch die Rohrleitung transportiert wird. Erfindungsgemäß durchwandert dabei eine Masse-Schicht während des Umwandlungsprozesses den als Rohrleitung ausgebildeten Druckbehälter. Dabei sind zu jedem Zeitpunkt an unterschiedlichen Stellen entlang der Rohrleitung die zum jeweiligen Zeitpunkt des Umwandlungsprozesses entsprechend vorliegenden Zwischenprodukte vorhanden. Eine besonders vorteilhafte Ausgestaltung der Erfindung sieht Schleusenkammern vor, die an unterschiedlichen Stellen entlang der Rohrleitung angeordnet sind und im Rahmen des Umwandlungsprozesses eine Entnahme des an der entsprechenden Stelle der Rohrleitung vorliegenden Zwischenprodukts zu ermöglichen, vorteilhafterweise bei beziehungsweise unter Aufrechterhaltung einer erfindungsgemäßen kontinuierlichen Prozessführung.
In einer weiteren vorteilhaften Ausgestaltung der Erfindung erfolgt die Zuführung von Biomasse, Wasser und/oder wenigstens einem Katalysator über wenigstens eine vor der wenigstens einen steuerbaren Einlassöffnung des Druckbehälters angeordnete, wenigstens eine steuerbare Einlassöffnung und wenigstens eine steuerbare Auslassöffnung aufweisende Schleusenkammer, wobei die Schleusenkammer seitens der wenigstens einen steuerbaren Einlassöffnung mit wenigstens einem Vorratsspeicher an Biomasse, Wasser und/oder wenigstens einem Katalysator und seitens der wenigstens einen steuerbaren Auslassöffnung mit der wenigstens einen steuerbaren Einlassöffnung des Druckbehälters verbindbar ist. Vorteilhafterweise erfolgt der Transport von Biomasse, Wasser und/oder wenigstens einem Katalysator aus der Schleusenkammer in den Druckbehälter durch Druckbeaufschlagung.
Eine weitere vorteilhafte Ausgestaltung der Erfindung sieht vor, dass die Zuführung von Biomasse, Wasser und/oder wenigstens einem Katalysator über eine vor der wenigstens einen steuerbaren Einlassöffnung des Druckbehälters angeordnete Kolben-Presseinrichtung erfolgt, wobei die Kolben-Presseinrichtung eine Kammer mit wenigstens einer Einlassöffnung, wenigstens einer steuerbaren Auslassöffnung und einem in der Kammer bewegbaren Kolben zum Pressen von in der Kammer befindlichem Gut aufweist. Vorteilhafterweise erfolgt der Transport von Biomasse, Wasser und/oder wenigstens einem Katalysator aus der Kammer in den Druckbehälter durch mittels des Kolbens aufgebauter Druckbeaufschlagung.
Gemäß einem weiteren Vorschlag der Erfindung erfolgt die Zuführung von Biomasse, Wasser und/oder wenigstens einem Katalysator vorteilhafterweise über eine vor der wenigstens einen steuerbaren Einlassöffnung des Druckbehälters angeordnete Excenterschneckenpumpe mit Druckregelung.

Der Transport von sich in dem Druckbehälter befindlichem Füllgut wird durch eine in der Rohrleitung des Druckbehälters angeordnete steuerbare Fördereinrichtung unterstützt, in Form einer steuerbaren Förderschnecke. Das Fördervolumen der Fördereinrichtung ist über eine Regeleinrichtung steuerbar. In einer konkreten Ausgestaltung der Erfindung erstreckt sich die Förderschnecke im wesentlichen über die gesamte Länge der Rohrleitung des Druckbehälters und ist im wesentlichen bündig an den Innenquerschnitt der Rohrleitung des Druckbehälters angepasst.
Eine weitere vorteilhafte Ausgestaltung der Erfindung sieht vor, dass die Temperatur- und/oder Druckverhältnisse in dem Druckbehälter über die wenigstens eine steuerbare Einlassöffnung und/oder die wenigstens eine steuerbare Auslassöffnung gesteuert werden, vorzugsweise über wenigstens eine Regeleinrichtung.

Der Druckbehälter wird beheizt. In der Ausgestaltung der Erfindung ist die Rohrleitung des Druckbehälters zumindest teilweise in einem mit wenigstens einem Wärmeübertragungsmedium, vorzugsweise Öl, füllbaren Behältnis angeordnet und wird die Beheizung des Druckbehälters über die Temperatur des wenigstens einen Wärmeübertragungsmediums in dem Behältnis gesteuert. Durch eine entsprechende erfindungsgemäße Anordnung ist auf einfache Art und Weise sicherstellbar, dass der gesamte Prozessablauf bei einer einheitlichen beziehungsweise vereinheitlichten Temperatur erfolgt. Ferner wird so im Rahmen des Prozessablaufs an den jeweiligen Stellen in der Rohrleitung entstehende Wärmeenergie (Reaktorwärme) unmittelbar abgeführt und so Bereichen zugeführt, an denen der Umwandlungsprozess bereits stattgefunden hat beziehungsweise weiter vorangeschritten ist. Voreilhafterweise wird so insbesondere eine Überhitzung einzelner Prozessabschnitte verhindert.
Eine besonders vorteilhafte Ausgestaltung der Erfindung ist gekennzeichnet durch Verwendung eines Eindickmittels, vorzugsweise Speisestärke wie Getreide- und/oder Kartoffelstärke, für das Füllgut aus Biomasse, Wasser und wenigstens einem Katalysator. In Abhängigkeit von Art und Ausgestaltung der Biomasse können Teile beziehungsweise Partikel der Biomasse in dem Wasser im Druckbehälter schwimmen und/oder sich im Druckbehälter ablagern. So sinken beispielsweise als Biomasse verwendetes Getreide und/oder getreideähnliche Produkte beziehungsweise deren Bestandteile aufgrund ihres spezifischen Gewichts in dem Druckbehälter ab, was mitunter zu Verstopfungen im Druckbehälter führt. Als Biomasse verwendetes Laub und/oder laubähnliche Produkte beziehungsweise deren Bestandteile schwimmt in dem Druckbehälter auf, was mitunter ebenfalls zu Verstopfungen im Druckbehälter führt. Durch die erfindungsgemäße Verwendung eines Eindickmittels sind diese Problematiken des Absinkens und/oder Aufschwimmens von Biomasseteilchen umgehbar und damit beseitigbar. Vorteilhafterweise wird das Eindickmittel in Mengen zugegeben, die bewirken, dass eine im wesentlichen zähflüssige Konsistenz erzielt wird. Vorteilhafterweise wird das Eindickmittel zunächst dem Wasser und/oder dem Katalysator zugegeben. Anschließend wird dieses zähflüssige Wasser-Katalysatorgemisch der Biomasse zugegeben.

In einer weiteren vorteilhaften Ausgestaltung der Erfindung erfolgt die Entnahme des wenigstens einen Reaktionsprodukts des Füllguts über eine nach der wenigstens einen steuerbaren Auslassöffnung des Druckbehälters angeordnete Trenneinrichtung, vorzugsweise durch Filterung.

Eine weitere vorteilhafte Ausgestaltung der Erfindung ist dadurch gekennzeichnet, dass das Reaktionsprodukt vor und/oder nach der Entnahme gepresst wird.

Eine weitere besonders vorteilhafte Ausgestaltung der Erfindung sieht vor, dass die Zuführung von Biomasse, Wasser und/oder wenigstens einem Katalysator, die Temperatur- und/oder Druckverhältnisse in dem Druckbehälter, der Transport des Füllguts durch den Druckbehälter und/oder die Entnahme des wenigstens einen Reaktionsprodukts des Füllguts aus dem Druckbehälter über eine Regelung erfolgt. Erfindungsgemäß ist so insbesondere der Bedien- und Personalaufwand im Rahmen der Prozessführung weiter reduzierbar. Eine weitere Ausgestaltung der Erfindung sieht vorteilhafterweise eine vollautomatische Prozessführung vor.

Vorteilhafterweise wird die Temperatur im Druckbehälter zumindest über die zeitliche Dauer des Transports des Füllguts durch den Druckbehälter konstant gehalten.

Eine weitere vorteilhafte Ausgestaltung der Erfindung sieht vor, dass die Temperatur im Druckbehälter zumindest über die zeitliche Dauer des Transports des Füllguts durch den Druckbehälter in einem Bereich zwischen etwa 140,00 Grad Celsius bis etwa 240,00 Grad Celsius, vorzugsweise zwischen etwa 180,00 Grad Celsius bis etwa 200,00 Grad Celsius gehalten wird.

Zur technischen Lösung der eingangs genannten Aufgabe wird eine Vorrichtung mit den Merkmalen des Anspruchs 12 vorgeschlagen.

Eine besonders vorteilhafte Ausgestaltung der Erfindung ist dadurch gekennzeichnet, dass die Rohrleitung zwischen der wenigstens einen Einlassöffnung und der wenigstens einen Auslassöffnung wenigstens eine Biegung aufweist, vorzugsweise wenigstens eine im wesentlichen U-förmige Biegung.

Die wenigstens eine Rohrleitung des Druckbehälters ist zumindest teilweise in einem mit wenigstens einem Wärmeübertragungsmedium, vorzugsweise Öl, füllbaren Behältnis angeordnet.

Die Ausgestaltung der Erfindung ist gekennzeichnet durch wenigstens eine steuerbare Heizeinrichtung zur Regelung der Temperatur in dem Druckbehälter.

Die Temperatur des Wärmeübertragungsmediums in dem Behältnis ist über die Heizeinrichtung steuerbar.

Eine weitere Ausgestaltung der Erfindung ist vorteilhafterweise gekennzeichnet durch wenigstens eine vor der wenigstens einen steuerbaren Einlassöffnung des Druckbehälters angeordnete Schleusenkammer zur Zuführung von Biomasse, Wasser und/oder wenigstens einem Katalysator durch die wenigstens eine steuerbare Einlassöffnung des Druckbehälters, aufweisend wenigstens eine steuerbare Einlassöffnung und wenigstens eine steuerbare Auslassöffnung. Die Schleusenkammer ist vorteilhafterweise seitens der wenigstens einen steuerbaren Einlassöffnung mit wenigstens einem Vorratsspeicher an Biomasse, Wasser und/oder wenigstens einem Katalysator und seitens der wenigstens einen steuerbaren Auslassöffnung mit der wenigstens einen steuerbaren Einlassöffnung des Druckbehälters verbindbar. Eine konkrete Ausgestaltung der Erfindung sieht vor, dass die steuerbare Einlassöffnung des Druckbehälters die steuerbare Auslassöffnung der Schleusenkammer bildet. Eine weitere Ausgestaltung der Erfindung ist gekennzeichnet durch wenigstens eine Pumpe zur steuerbaren und/oder regelbaren Druckbeaufschlagung der Schleusenkammer.

Eine weitere vorteilhafte Ausgestaltung der Erfindung ist gekennzeichnet durch eine vor der wenigstens einen steuerbaren Einlassöffnung des Druckbehälters angeordnete Kolben-Presseinrichtung zur Zuführung von Biomasse, Wasser und/oder wenigstens einem Katalysator durch die wenigstens eine steuerbare Einlassöffnung des Druckbehälters, aufweisend eine Kammer mit wenigstens einer Einlassöffnung, wenigstens einer steuerbaren Auslassöffnung und einem in der Kammer bewegbaren Kolben zum Pressen von in der Kammer befindlichem Gut.

Eine weitere vorteilhafte Ausgestaltung der Erfindung ist gekennzeichnet durch eine vor der wenigstens einen steuerbaren Einlassöffnung des Druckbehälters angeordnete Excenterschneckenpumpe mit Druckregelung zur Zuführung von Biomasse, Wasser und/oder wenigstens einem Katalysator durch die wenigstens eine steuerbare Einlassöffnung des Druckbehälters.

Die Ausgestaltung der Erfindung ist gekennzeichnet durch eine vorzugsweise in der Rohrleitung des Druckbehälters angeordnete steuerbare Fördereinrichtung, in Form einer steuerbaren Förderschnecke, zur Unterstützung des Transports von sich in dem Druckbehälter befindlichem Füllgut.

Das Fördervolumen der Fördereinrichtung ist über eine Regeleinrichtung steuerbar. Die Erfindung ist dadurch gekennzeichnet, dass sich die Förderschnecke im wesentlichen über die gesamte Länge der Rohrleitung des Druckbehälters erstreckt und im wesentlichen bündig an den Innenquerschnitt der Rohrleitung des Druckbehälters angepasst ist.

Die Ausgestaltung der Erfindung ist gekennzeichnet durch eine vorzugsweise steuerbare Einrichtung zum Beheizen des Druckbehälters.

Eine weitere vorteilhafte Ausgestaltung der Erfindung ist gekennzeichnet durch wenigstens eine Regeleinrichtung zur zumindest teilautomatischen Steuerung der Temperatur- und/oder Druckverhältnisse in dem Druckbehälter über die wenigstens eine steuerbare Einlassöffnung und/oder die wenigstens eine steuerbare Auslassöffnung.

Eine weitere vorteilhafte Ausgestaltung der Erfindung ist gekennzeichnet durch wenigstens eine nach der wenigstens einen steuerbaren Auslassöffnung des Druckbehälters angeordnete Trenneinrichtung, vorzugsweise Filtereinrichtung, über welche die Entnahme des wenigstens einen Reaktionsprodukts des Füllguts erfolgt.

Eine weitere vorteilhafte Ausgestaltung der Erfindung ist gekennzeichnet durch wenigstens eine Regeleinrichtung zur zumindest teilautomatischen Steuerung der Zuführung von Biomasse, Wasser und/oder wenigstens einem Katalysator, der Temperatur- und/oder Druckverhältnisse in dem Druckbehälter, des Transports des Füllguts durch den Druckbehälter und/oder der Entnahme des wenigstens einen Reaktionsprodukts des Füllguts aus dem Druckbehälter.

In einer weiteren, besonders vorteilhaften Ausgestaltung der Erfindung ist die erfindungsgemäße Vorrichtung ausgebildet und/oder eingerichtet ist, ein erfindungsgemäßes Verfahren zumindest teilweise auszuführen.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Prinzipdarstellung ein Ausführungsbeispiel für eine Vorrichtung zur hydrothermalen Karbonisierung von Biomasse in einem diskontinuierlichen Betrieb gemäß dem Stand der Technik;
- Fig. 2a: in einer schematischen Prinzipdarstellung ein Ausführungsbeispiel für eine erfindungsgemäße Vorrichtung zur hydrothermalen Karbonisierung von Biomasse in einem kontinuierlichen Betrieb;
- Fig. 2b: in einer schematischen Prinzipdarstellung ein weiteres Ausführungsbeispiel für eine erfindungsgemäße Vorrichtung zur hydrothermalen Karbonisierung von Biomasse in einem kontinuierlichen Betrieb;
- Fig. 3: in einer geschnittenen Seitenansicht ein Ausführungsbeispiel für einen erfindungsgemäßen Druckbehälter zur hydrothermalen Karbonisierung von Biomasse in einem kontinuierlichen Betrieb nach Fig. 2a;
- Fig. 4: in einer schematischen Seitenansicht ein Ausführungsbeispiel für einen erfindungsgemäßen Druckbehälter zur hydrothermalen Karbonisierung von Biomasse in einem kontinuierlichen Betrieb nach Fig. 2b;
- Fig. 5a - 5c: in einer schematischen Prinzipdarstellung ein Ausführungsbeispiel für eine erfindungsgemäße Befüllung des Druckbehälters einer erfindungsgemäßen Vorrichtung zur hydrothermalen Karbonisierung von Biomasse in einem kontinuierlichen Betrieb über eine Schleusenkammer;
- Fig. 6: in einer schematischen Prinzipdarstellung ein Ausführungsbeispiel für eine erfindungsgemäße Befüllung des Druckbehälters einer erfindungsgemäßen Vorrichtung zur hydrothermalen Karbonisierung von Biomasse in einem kontinuierlichen Betrieb über eine Excenterschneckenpumpe;
- Fig. 7: in einer schematischen Prinzipdarstellung ein Ausführungsbeispiel für eine einen Teil einer erfindungsgemäßen Regelung einer erfindungsgemäßen Vorrichtung zur hydrothermalen Karbonisierung von Biomasse in einem kontinuierlichen Betrieb;
- Fig. 8: in einer schematischen Prinzipdarstellung ein Ausführungsbeispiel einer erfindungsgemäßen Vorrichtung zur hydrothermalen Karbonisierung von Biomasse in einem kontinuierlichen Betrieb mit einer Befüllung über eine Kolben-Presseinrichtung;
- Fig. 9: in einer schematischen Prinzipdarstellung ein weiteres Ausführungsbeispiel einer erfindungsgemäßen Vorrichtung zur hydrothermalen Karbonisierung von Biomasse in einem kontinuierlichen Betrieb mit einer Befüllung über eine Kolben-Presseinrichtung;
- Fig. 10: in einer schematischen Prinzipdarstellung ein weiteres Ausführungsbeispiel einer erfindungsgemäßen Vorrichtung zur hydrothermalen Karbonisierung von Biomasse in einem kontinuierlichen Betrieb nach Fig. 8;
- Fig. 11: in einer schematischen Prinzipdarstellung ein weiteres Ausführungsbeispiel einer erfindungsgemäßen Vorrichtung zur hydrothermalen Karbonisierung von Biomasse in einem kontinuierlichen Betrieb nach Fig. 8 und
- Fig. 12: in einer schematischen Querschnittsansicht ein weiteres Ausführungsbeispiel für einen erfindungsgemäßen Druckbehälter einer erfindungsgemäßen Vorrichtung zur hydrothermalen Karbonisierung von Biomasse in einem kontinuierlichen Betrieb.

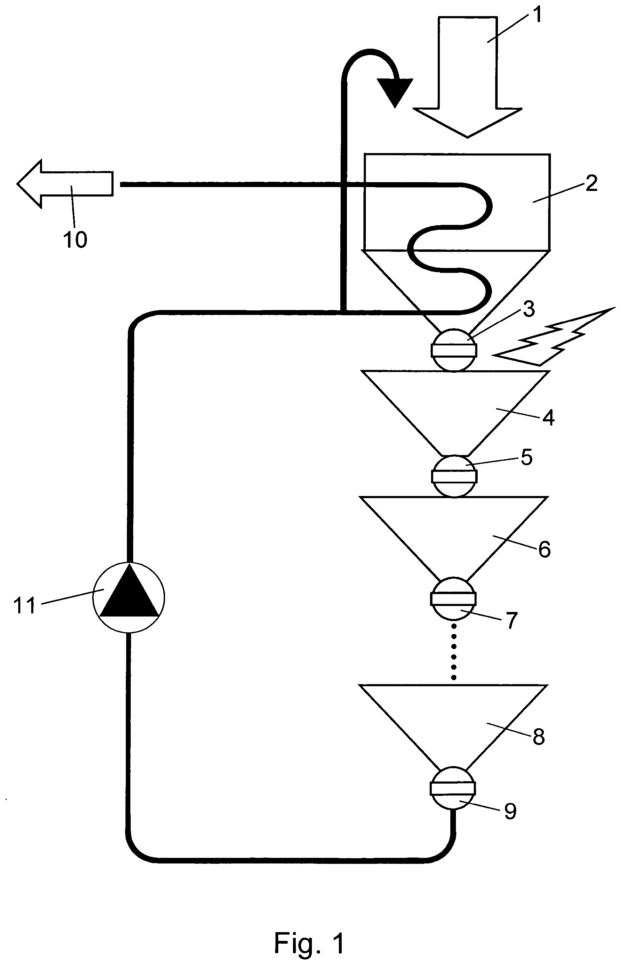

Fig. 1 zeigt eine Vorrichtung zur hydrothermalen Karbonisierung von Biomasse in einem diskontinuierlichen Betrieb gemäß dem Stand der Technik. Dabei wird ein aus Biomasse mit Wasser und wenigstens einem Katalysator bestehendes Füllgut 1 in einen ersten Druckbehälter 2 (Startbehälter) gefüllt und der Druckbehälter 2 dann druckdicht verschlossen. Anschließend wird unter Temperatur- und Druckerhöhung in dem Druckbehälter 2 die Umwandlung beziehungsweise Umsetzung der Biomasse durchgeführt. Dabei wird der Druckbehälter auf einer Temperatur von etwa 180 Grad Celsius bis etwa 200 Grad Celsius gehalten. Die zeitliche Dauer dieses exotherm ablaufenden Umwandlungsprozesses beträgt vorliegend etwa zwölf Stunden. Anschließend wird der Druckbehälter 2 geöffnet und das Umwandlungsprodukt dem Druckbehälter 2 entnommen. Die Entnahme erfolgt vorliegend über ein Absperrorgan 3 in einen Druckbehälter 4 (Folgebehälter 1). An den Druckbehälter 4 schließen sich entsprechend kaskadiert über Absperrorgane 5 beziehungsweise 7 weitere Druckbehälter 6 beziehungsweise 8 (Folgebehälter 2 bis Folgebehälter n) an. Dem sich am Ende der Kaskade befindenden Druckbehälter 8 wird das Reaktionsprodukt 10, vorliegend insbesondere in Form von Kohleschlamm, schließlich über ein Absperrorgan 9 entnommen. Das entnommene Reaktionsprodukt wird dabei vorliegend zur Nutzung der Reaktionswärme über ein eine Pumpe 11 aufweisendes Heizrohrleitungssystem dem ersten Druckbehälter 2 (Startbehälter) zugeführt. Insgesamt sind der maschinen- und/oder anlagentechnische Aufwand als auch der Bedien- und Personalaufwand bei einer solchen diskontinuierlichen Prozessführung erheblich, insbesondere angesichts der zahlreichen Druckbehälter, Absperrorgane und/oder Pumpen, die zu unterschiedlichen Zeitpunkten und Reihenfolgen geöffnet beziehungsweise verschlossen werden müssen, wobei auch noch die jeweiligen Temperatur- und/oder Druckverhältnisse berücksichtigt und eingestellt werden müssen.

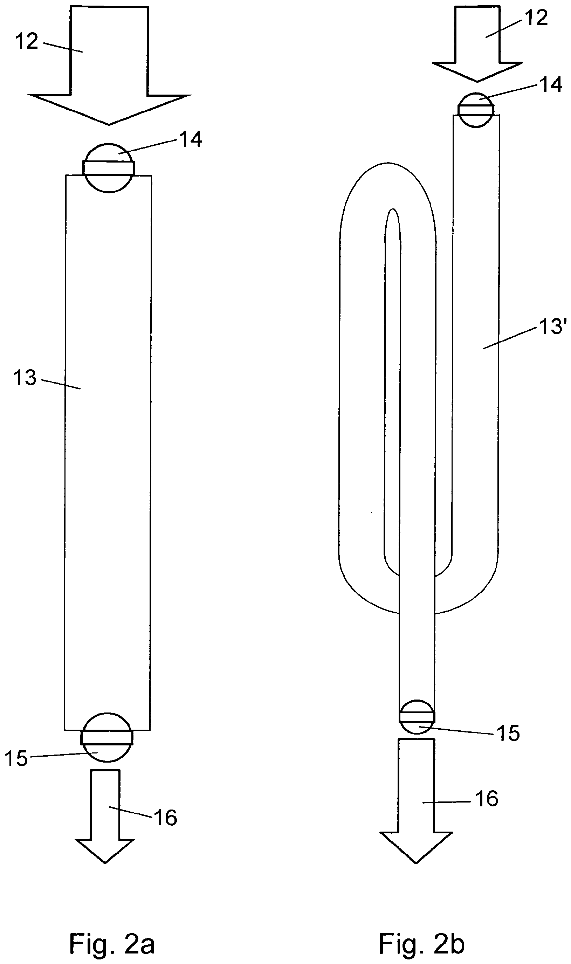

Fig. 2a und Fig. 2b zeigen jeweils ein Ausführungsbeispiel für eine erfindungsgemäße Vorrichtung zur hydrothermalen Karbonisierung von Biomasse in einem kontinuierlichen Betrieb. Dabei wird ein aus Biomasse mit Wasser und wenigstens einem Katalysator bestehendes Füllgut 12 in einem aus einer Rohrleitung mit wenigstens einer steuerbaren Einlassöffnung und wenigstens einer steuerbaren Auslassöffnung ausgebildeten Druckbehälter 13 beziehungsweise 13' durch Temperatur- und/oder Druckerhöhung in Stoffe 16 wie Kohle, Öl und/oder dergleichen artverwandte Stoffe umgewandelt. Seitens der steuerbaren Einlassöffnung ist vorliegend ein steuerbares Absperrorgan 14 angeordnet. Seitens der steuerbaren Auslassöffnung ist vorliegend ein steuerbares Absperrorgan 15 angeordnet. Bei dem in Fig. 2a dargestellten Ausführungsbeispiel ist die den Druckbehälter 13 bildende Rohleitung gerade ausgebildet. Bei dem in Fig. 2b dargestellten Ausführungsbeispiel weist die den Druckbehälter 13' bildende Rohleitung zwischen dem Absperrorgan 14 der Einlassöffnung und dem Absperrorgan 15 der Auslassöffnung vorliegend zwei im wesentlichen U-förmige Biegungen auf.

Im Betrieb wird der den Druckbehälter 13 beziehungsweise 13' bildenden Rohrleitung über das steuerbare Absperrorgan 14 der Einlassöffnung des Druckbehälters 13 das aus Biomasse, Wasser und/oder wenigstens ein Katalysator bestehende Füllgut 12 zugeführt und anschließend der Druckbehälter 13 beziehungsweise 13' druckdicht verschlossen. Dann werden die Temperatur und der Druck in dem Druckbehälter 13 beziehungsweise 13' erhöht. Die Temperatur- und/oder Druckverhältnisse in dem Druckbehälter 13 beziehungsweise 13' werden dabei derart gesteuert, dass dem Druckbehälter 13 beziehungsweise 13' zugeführtes Füllgut 12 selbstständig und vorzugsweise definiert durch die Rohrleitung transportiert wird. Dabei reagieren Biomasse, Wasser und Katalysator des Füllguts in der Rohrleitung miteinander. Erfindungsgemäß durchwandert dabei eine Masse-Schicht während des Umwandlungsprozesses den als Rohrleitung ausgebildeten Druckbehälter. Die Länge der Rohrleitung bestimmt in Verbindung mit der Füllmenge - und damit mit der Größe beziehungsweise dem Durchmesser der Rohrleitung - maßgeblich die zeitliche Dauer der Prozessführung. Über das steuerbare Absperrorgan 15 der Auslassöffnung des Druckbehälters 13 beziehungsweise 13' wird das Reaktionsprodukt 16, vorliegend insbesondere in Form von Kohleschlamm und /oder Öl-ähnlichen Produkten, schließlich zur weiteren Verarbeitung und/oder Nutzung durch öffnen des Absperrorgans 15 entnommen. Die erfindungsgemäße Ausgestaltung erlaubt dabei vorteilhafterweise einen kontinuierlichen Betrieb, wobei über die steuerbare Einlassöffnung dem Druckbehälter 13 beziehungsweise 13' kontinuierlich, das heißt vorliegend mitunter auch in Intervallen, Füllgut 12 zugeführt wird und über die die steuerbare Auslassöffnung des Druckbehälter 13 beziehungsweise 13' kontinuierlich, das heißt vorliegend mitunter auch in Intervallen, das Reaktionsprodukt 16 entnommen wird.

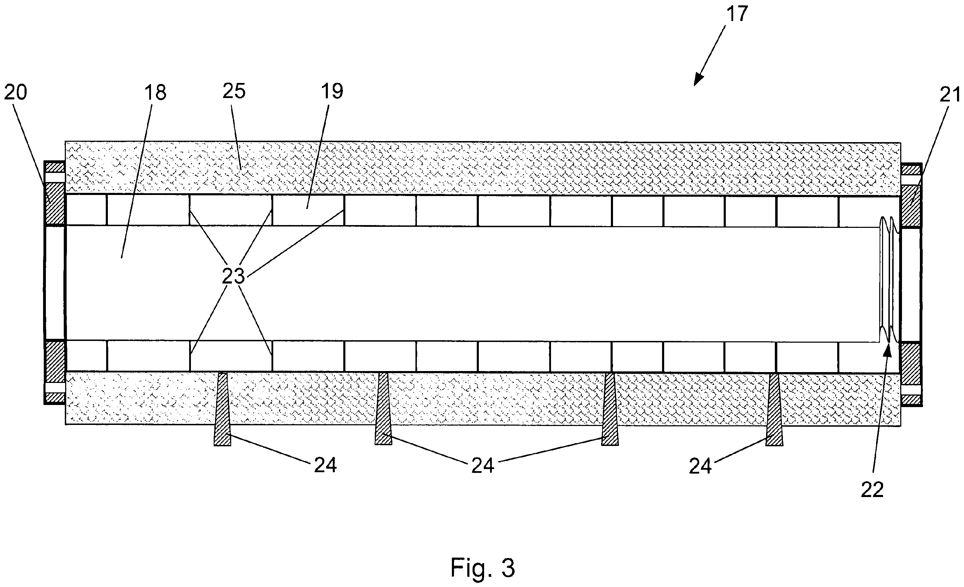

Der in Fig. 3 in einer geschnittenen Seitenansicht dargestellte erfindungsgemäße Druckbehälter 17 zur hydrothermalen Karbonisierung von Biomasse in einem kontinuierlichen Betrieb nach Fig. 2a ist aus zwei geraden, unterschiedliche Durchmesser aufweisenden und im wesentlichen koaxial zueinander angeordnet verlaufenden Rohrleitungen 18 und 19 ausgebildet, einem Innenrohr 18 und einem Außenrohr 19. An den freien Enden der das innere Rohr (Innenrohr 18) bildenden Rohrleitung 18 sind Flansche 20 und 21 angeschweißt. Die Flansche 20 und 21 dienen zur Aufnahmen beziehungsweise zum Anschluss von steuerbaren Absperrorganen für die Einlassöffnung beziehungsweise die Auslassöffnung des Druckbehälters 17. Im Bereich des in Fig. 3 rechts gelegenen Endes der Rohrleitung 18 ist diese über einen Kompensator 22 mit dem Flansch 21 verschweißt. In dem Raum zwischen der inneren Rohrleitung 18 und der äußeren Rohrleitung 19 sind vorliegend über die Länge der Rohrleitungen 18 beziehungsweise 19 verteilt und beabstandet voneinander ringscheibenförmig ausgebildete Stabilisierungsrippen 23 angeordnet. Die Stabilisierungsrippen 23 verhindern insbesondere Beschädigungen und/oder Verbiegungen der äußeren Rohrleitung 19, welche aufgrund des Gewichts des Druckbehälters 17, insbesondere im gefüllten Zustand und im Betrieb, durch die Stützbeziehungsweise Aufstelllager 24 des Druckbehälter 17 verursacht werden könnten.

Der Raum zwischen der inneren Rohrleitung 18 und der äußeren Rohrleitung 19 ist vorliegend vorzugsweise drucklos, das heißt ohne Druckbeaufschlagung mit einem Wärmeübertragungsmedium (in Fig. 3 nicht dargestellt), vorzugsweise einem Bio-/Thermoöl, gefüllt, welches zur Beheizung des Druckbehälters 17, insbesondere der inneren Rohrleitung 18, dient. Vorteilhafterweise wird die Beheizung des Druckbehälters 17 dabei über die Temperatur des Öls gesteuert. Durch diese Anordnung ist auf einfache Art und Weise sichergestellt, dass der gesamte Prozessablauf bei einer einheitlichen beziehungsweise vereinheitlichten Temperatur erfolgt. Ferner wird so im Rahmen des Prozessablaufs an den jeweiligen Stellen in der Rohrleitung 18 entstehende Wärmeenergie (Reaktorwärme) unmittelbar abgeführt und so Bereichen zugeführt, an denen der Umwandlungsprozess bereits stattgefunden hat beziehungsweise weiter vorangeschritten ist. Eine Überhitzung einzelner Prozessabschnitte wird dabei verhindert. Zur weiteren Verbesserung der Beheizung ist auf der äußeren Rohrleitung 19 des Druckbehälters 17 eine Wärmedämmung 25 angeordnet beziehungsweise aufgebracht.

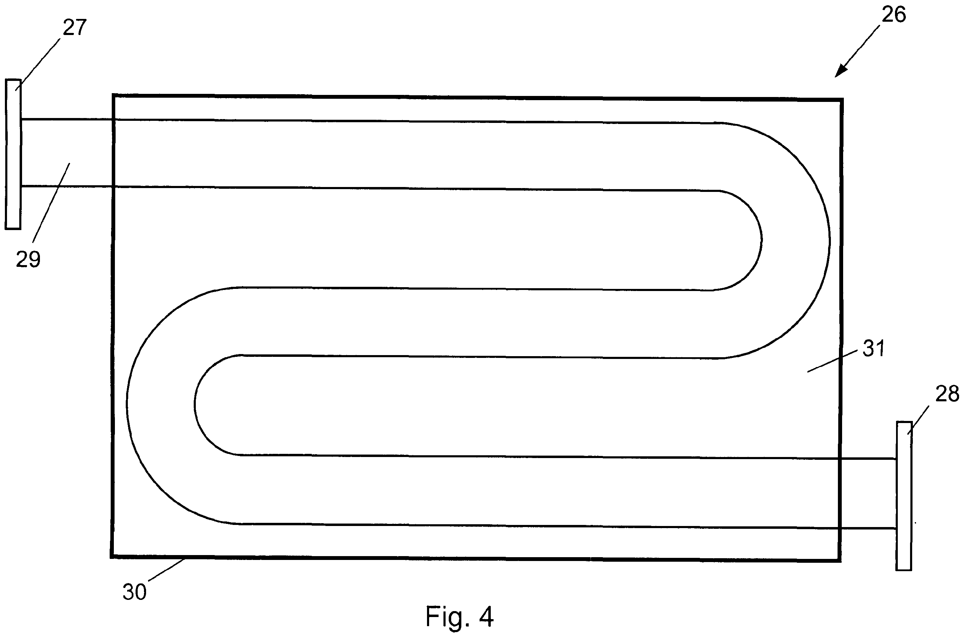

Bei dem in Fig. 4 dargestellten erfindungsgemäßen Druckbehälter 26 zur hydrothermalen Karbonisierung von Biomasse in einem kontinuierlichen Betrieb nach Fig. 2b ist eine an ihren freien Enden mit Flanschen 27 und 28 versehene gebogene Rohrleitung 29 durch einen geschlossenen Behälter 30 geführt, welcher zur Beheizung der Rohrleitung 29 vorzugsweise drucklos mit einem Wärmeübertragungsmedium 31, vorliegend einem Bio-/Thermoöl, gefüllt ist.

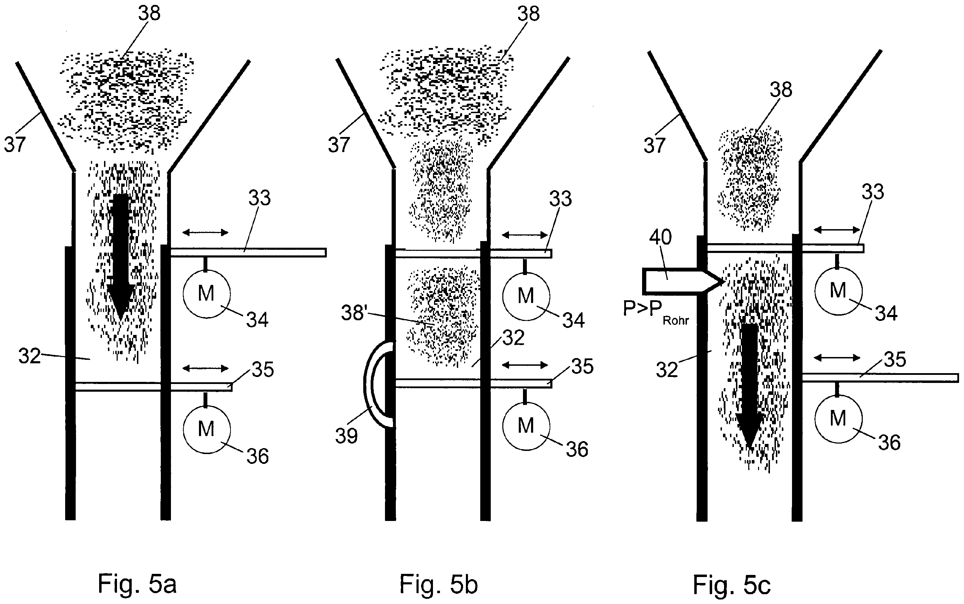

Bei dem in den Fig. 5a bis 5c dargestellten Ausführungsbeispiel erfolgt die Befüllung des Druckbehälters mit dem aus Biomasse, Wasser und/oder wenigstens einem Katalysator über wenigstens eine Schleusenkammer 32 mit einer steuerbaren Einlassöffnung und einer steuerbare Auslassöffnung, welche vor der wenigstens einen steuerbaren Einlassöffnung des Druckbehälters angeordnet ist. Die Steuerbarkeit der Einlassöffnung der Schleusenkammer 32 wird vorliegend mit einem Schieber 33 realisiert, welcher über ein Stellorgan beziehungsweise einen Antrieb 34 steuerbar ist. Die Steuerbarkeit der Auslassöffnung der Schleusenkammer 32 wird vorliegend mit einem Schieber 35 realisiert, welcher über ein Stellorgan beziehungsweise einen Antrieb 36 steuerbar ist. Die Schleusenkammer 32 ist mittels des steuerbaren Schiebers 33 gegenüber einem Nachfülllager 37 für Biomasse, Wasser und/oder Katalysator und mittels des steuerbaren Schiebers 35 gegenüber dem Druckbehälter abdichtbar.

Im kontinuierlichen Betrieb wird das aus Biomasse, Wasser und/oder wenigstens einem Katalysator bestehende Füllgut 38 vor der Einlassöffnung der Schleusenkammer 32 gelagert, vorliegend in dem Nachfülllager 37. Mit Öffnen der Einlassöffnung der Schleusenkammer 32 durch den steuerbaren Schieber 33 gelangt - wie in Fig. 5a dargestellt - Füllgut 38 in die Schleusenkammer 32, vorliegend durch Fallen. Die im wesentlichen vollständig mit Füllgut 38' gefüllte Schleusenkammer 32 wird dann durch Verstellung des steuerbaren Schiebers 33 der Einlassöffnung der Schleusenkammer 32 geschlossen (vgl. Fig. 5b) und anschließend wird der Druck in der Schleusenkammer 32 auf den Druck in dem Druckbehälter angeglichen. In Fig. 5b ist diese Druckangleichung symbolisch durch eine Druckausgleichleitung 39 zwischen der geschlossenen Schleusenkammer 32 und dem sich nach dem Schieber 35 der Schleusenkammer 32 anschließenden Abschnitt, welcher mit der wenigstens einen steuerbaren Einlassöffnung des Druckbehälters verbundenen ist, dargestellt. Die Druckangleichung erfolgt vorliegend mit einer Pumpe mittels Druckluft oder Wasser. Nach Erreichen des Solldrucks, vorliegend des Angleichdrucks, in der Schleusenkammer 32 wird die Auslassöffnung der Schleusenkammer 32 durch Verstellung des steuerbaren Schiebers 35 geöffnet (vgl. Fig. 5c). Anschließend wird der Druck in der Schleusenkammer 32 erhöht, in Fig. 5c symbolisch durch den mit 40 gekennzeichneten Pfeil dargestellt. Durch die Druckerhöhung wird das sich in der Schleusenkammer 32 befindende Füllgut 38' in den Druckbehälter gedrückt - wie in Fig. 5c dargestellt -und der Druckbehälter gefüllt. Nach Leerung der Schleusenkammer 32 wird diese durch Verstellung des steuerbaren Schiebers 35 der Auslassöffnung der Schleusenkammer 32 wieder geschlossen. Anschließen wiederholt sich der Vorgang beginnend mit Fig. 5a.

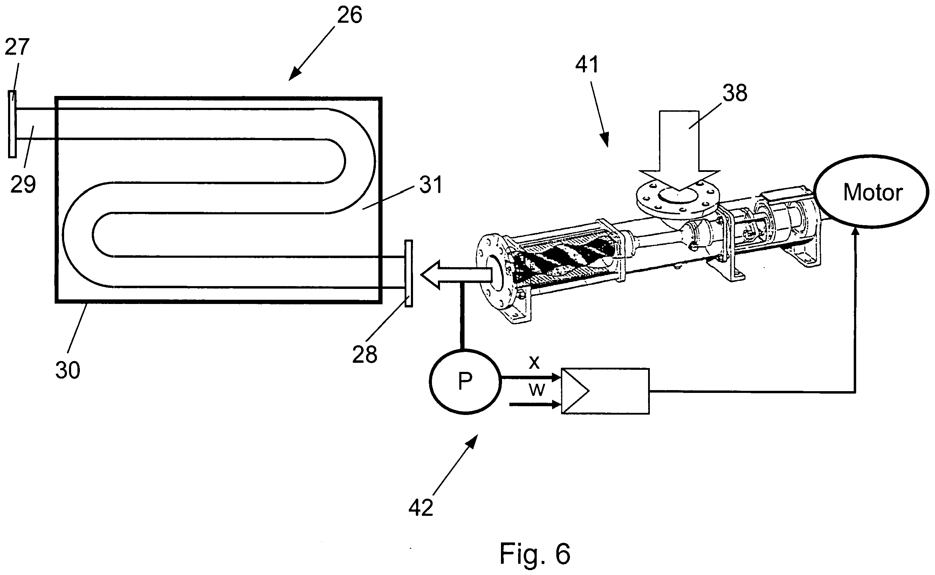

Bei dem in den Fig. 6 dargestellten Ausführungsbeispiel wird dem Druckbehälter 29 einer erfindungsgemäßen Vorrichtung 26 zur hydrothermalen Karbonisierung von Biomasse in einem kontinuierlichen Betrieb das aus Biomasse, Wasser und/oder wenigstens einem Katalysator bestehende Füllgut 38 kontinuierlich über wenigstens eine Excenterschneckenpumpe 41 mit integrierter Druckregelung 42 zugeführt, welche vor der wenigstens einen steuerbaren Einlassöffnung des Druckbehälters 29 angeordnet ist.

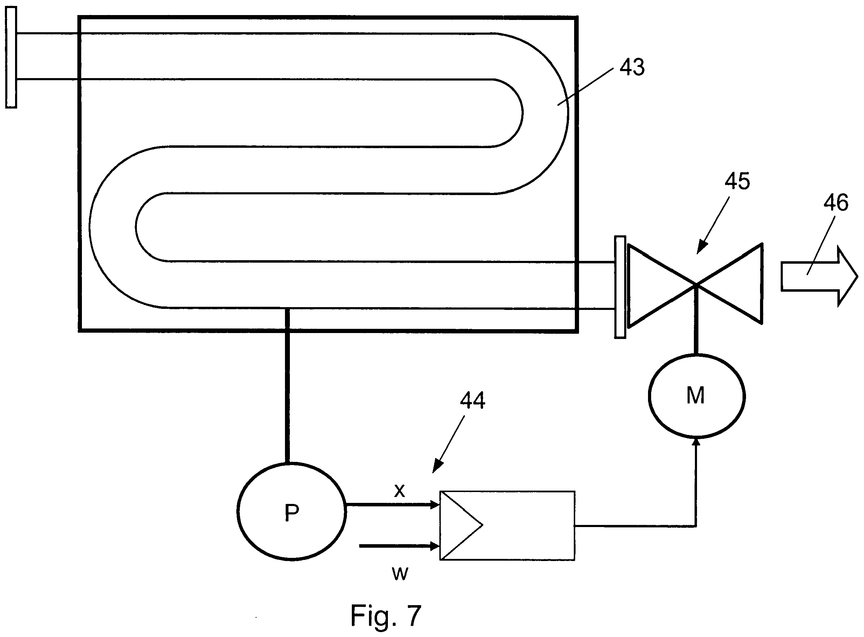

Bedingt durch die im Zusammenhang der Zuführung von Füllgut in den Druckbehälter einer erfindungsgemäßen Vorrichtung zur hydrothermalen Karbonisierung von Biomasse in einem kontinuierlichen Betrieb nach den Fig. 5a bis 5c mittels einer Schleusenkammer 32 beziehungsweise nach Fig. 6 mittels einer Excenterschneckenpumpe 41 Teil einer erfindungsgemäßen Regelung einer erfindungsgemäßen erhöht sich der Druck in dem Druckbehälter. Zur Regelung der für den Umwandlungsprozess einzuhaltenden Druckverhältnisse wird, wie in Fig. 7 dargestellt, eine solche Innendruckerhöhung in einem erfindungsgemäßen Druckbehälter 43 auf einen Regelkreis 44 geführt, welcher ein die steuerbare Auslassöffnung des Druckbehälters 43 bildendes Regelorgan 45 öffnet beziehungsweise schließt. Bedingt durch den Prozessablauf in dem Druckbehälter 43 ist vorliegend über den Druck im Inneren des Druckbehälters 43 an dem Regelorgan 45 Kohle 46 in feinverteilter, kugelförmiger Form in Wasser gelöst entnehmbar.

Die im Wasser gelösten feinstverteilten, kugelförmigen Kohlepartikel, das Öl und/oder die artverwandten Stoffe werden vorteilhafterweise durch Ausfilterung entnommen, vorzugsweise über Filtriereinrichtungen, Dekantern und/oder Zentrifugen. Die nasse Kohlemasse wird dann vorzugsweise in Kohlepellets mit einem Durchmesser von etwa 6 nm bis etwa 60 nm oder zu Briketts gepresst. Die Kohlepellets werden vorteilhafterweise insbesondere aufgrund ihrer hohen Reinheit als Basisprodukt für die chemische Industrie, als Dünger oder als unmittelbar für Verbrennungsprozesse einsetzbarer beziehungsweise nutzbarer Stoff eingesetzt.

Anstelle einer Kohlepelletsgewinnung wird das Filtrat von in Wasser gelösten feinstverteilten, kugelförmigen Kohlepartikeln, dem Öl und/oder den artverwandten Stoffen getrocknet und als loses Material verwertet. Vorteilhafterweise entstehen bei bestimmten Druck- und/oder Temperaturverhältnissen unter Berücksichtigung der Konzentration des Katalysators und/oder der Prozess- beziehungsweise Durchlaufzeit vorteilhafterweise Öl- beziehungsweise Öl-ähnliche Produkte.

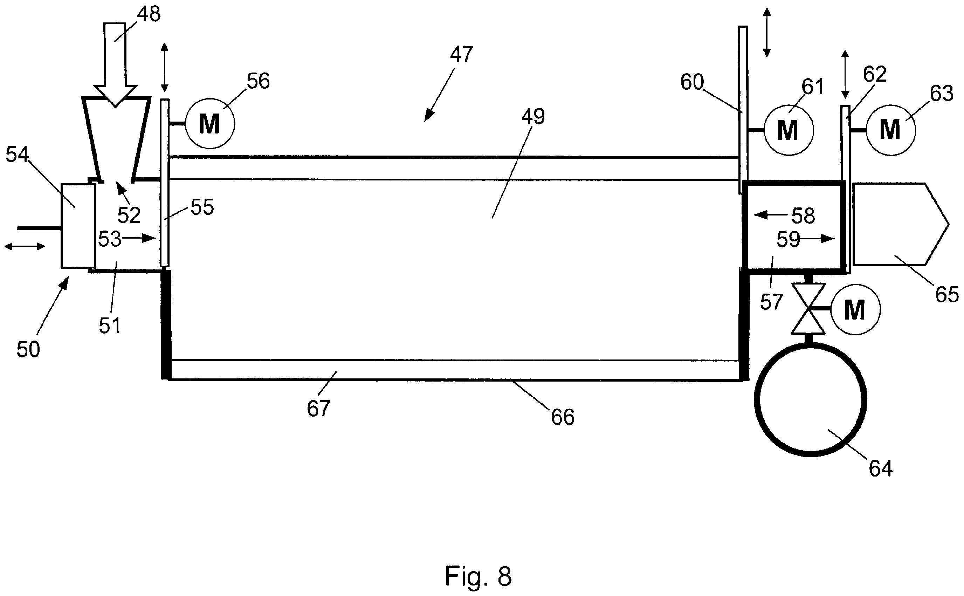

Bei dem in Fig. 8 dargestellten Ausführungsbeispiel einer erfindungsgemäßen Vorrichtung 47 zur hydrothermalen Karbonisierung von Biomasse in einem kontinuierlichen Betrieb erfolgt die Zuführung von aus Biomasse, Wasser und/oder wenigstens einem Katalysator bestehendem Füllgut 48 in den Druckbehälter 49 der Vorrichtung 47 über eine Kolben-Presseinrichtung 50. Die Kolben-Presseinrichtung 50 weist eine Kammer 51 mit einer Einlassöffnung 52, einer steuerbaren Auslassöffnung 53 und einem in der Kammer 51 bewegbaren Kolben 54 zum Pressen von in der Kammer 51 befindlichem Gut auf. Die Steuerbarkeit der Auslassöffnung 53 der Kolbenkammer 51 wird vorliegend mit einem Schieber 55 realisiert, welcher über ein Stellorgan beziehungsweise einen Antrieb 56 steuerbar ist. Vorliegend wird die steuerbare Einlassöffnung des Druckbehälters 49 von der steuerbaren Auslassöffnung 53 der Kolbenkammer 51 gebildet.

Im Rahmen der Zuführung von Füllgut 48 in den Druckbehälter 49 wird zunächst Füllgut 48 bei geschlossener Auslassöffnung 53 und zurückgezogenem Kolben 54 in die Kolbenkammer 51 eingeleitet. Daraufhin wird das sich in der Kolbenkammer 51 befindliche Füllgut 48 mittels des Kolbens 54 auf einen definierten Druck vorgepresst. Bei Erreichen des definierten Drucks öffnet der Schieber 55 von der der Kolbenkammer 51 zu dem Druckbehälter 49 und der Kolben 51 presst das verdichtete Füllgut 48 in den Druckbehälter 49. Anschließend schließt der Schieber 55 die Einlassöffnung des Druckbehälters 49 der Vorrichtung 47 und damit die Auslassöffnung 53 der Kammer 51 der Kolben-Presseinrichtung 50.

Mit Einpressen des vorgepressten Füllguts in den Druckbehälter 49 erhöht sich vorliegend simultan der Druck im Inneren des Druckbehälters 49. Vorliegend wird diese Druckerhöhung dazu genutzt, eine Kammer 57 zur Entnahme (Auslasskammer/Schleusenkammer) von Reaktionsprodukten des im Druckbehälter 49 erfindungsgemäß umgewandelten Füllguts mit Reaktionsprodukten des Füllguts zu füllen.

Die Kammer 57 weist vorliegend eine steuerbare Einlassöffnung 58 und eine steuerbare Auslassöffnung 59 auf. Vorliegend wird dabei die steuerbare Auslassöffnung des Druckbehälters 49 von der steuerbaren Einlassöffnung 58 der Kammer 57 gebildet. Die Steuerbarkeit der Einlassöffnung 58 der Schleusenkammer 57 wird vorliegend mit einem Schieber 60 realisiert, welcher über ein Stellorgan beziehungsweise einen Antrieb 61 steuerbar ist. Die Steuerbarkeit der Auslassöffnung 59 der Kammer 57 wird vorliegend mit einem Schieber 62 realisiert, welcher über ein Stellorgan beziehungsweise einen Antrieb 63 steuerbar ist.

Zur Befüllung der Kammer 57 öffnet der Schieber 60 die Kammer 57. Sich vor dem Schieber 60 befindliches Reaktionsprodukt des Füllguts, vorliegend ein Wasser-Kohlegemisch, wird dann aus dem Druckbehälter 49 in die geöffnete Kammer 57 gepresst. Mit Beendigung dieses Einpressvorganges schließt auch der Schieber 60 die Einlassöffnung 58 der Schleusenkammer 57 druckdicht gegenüber dem Druckbehälter 49 ab. Das sich in der Schleusenkammer 57 befindende Reaktionsprodukt kann dann über den Schieber 62 der Schleusenkammer 57 entnommen werden, bei Bedarf mitunter unter Nutzung eines steuerbaren Druckausgleichbehälters 64. In Fig. 8 ist die Entnahme symbolisch durch den mit dem Bezugszeichen 65 gekennzeichneten Pfeil dargestellt.

Bei dem in Fig. 8 dargestellten Ausführungsbeispiel ist der Druckbehälter 49 durch gerade Rohrleitung 49 ausgebildet, welche durch einen weiteren, vorliegend ebenfalls als gerade Rohleitung ausgebildeten Behälter 66 geführt. Der Raum zwischen der Rohrleitung 49 des Druckbehälters 49 und der Rohrleitung 66 des Behälters ist vorliegend mit einem Bio-/Thermoöl als Wärmeübertragungsmedium, gefüllt, welches zur Beheizung des Druckbehälters 49 vorteilhafterweise unter Druck in einem Kreislauf geführt und bei Bedarf erwärmt beziehungsweise erhitzt wird.

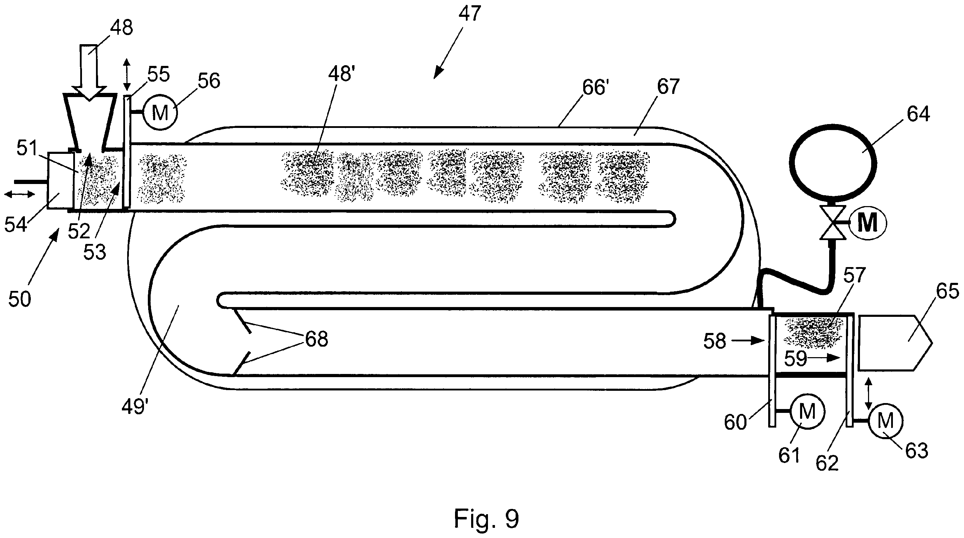

Das in Fig. 9 dargestellte Ausführungsbeispiel unterscheidet sich von dem in Fig. 8 dargestellten Ausführungsbeispiel einer erfindungsgemäßen Vorrichtung 47 zur hydrothermalen Karbonisierung von Biomasse in einem kontinuierlichen Betrieb durch die Ausgestaltung des Druckbehälters 49' und dem Behälter 66' durch den der Druckbehälter durchgeführt ist. Der Druckbehälter 49' der Vorrichtung 47 gemäß Fig. 9 ist dabei durch eine gebogene Rohrleitung 49' ausgebildet. Die Anordnung der Biegungen der Rohrleitung 49' ist dabei vorteilhafterweise so ausgestaltet, dass die leichtere Biomasse/Kohle immer entgegen dem Auftrieb durch die Rohrleitung 49' transportiert wird. Mitunter sind dazu in der Rohleitung 49' Blenden als Rückfluss- und/oder Auftriebssperren 68 angeordnet (in Fig. 9 symbolisch dargestellt).

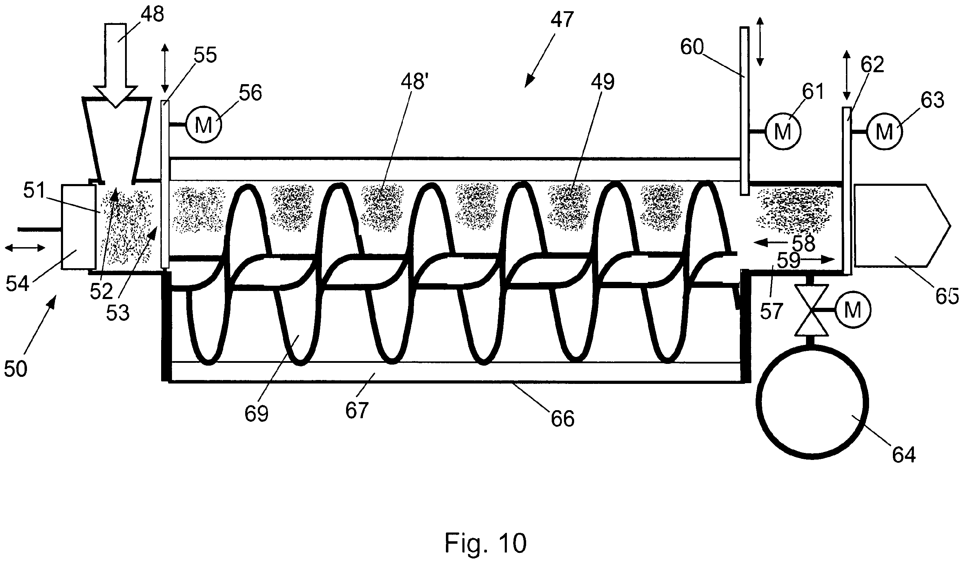

Das in Fig. 10 dargestellte Ausführungsbeispiel einer erfindungsgemäßen Vorrichtung 47 zur hydrothermalen Karbonisierung von Biomasse in einem kontinuierlichen Betrieb entspricht im Aufbau und der Funktionsweise im wesentlichen dem in Fig. 8 dargestellten und vorstehend beschriebenen Ausführungsbeispiel. Der Transport der Biomasse durch den Druckbehälter 49 hängt unter anderem auch von der Konsistenz und/oder der Zusammensetzung der in den Druckbehälter 49 einzufüllenden Biomasse ab. Um die Vorrichtung 47 weitestgehend unabhängig von der Konsistenz und/oder der Zusammensetzung der in den Druckbehälter 49 einzufüllenden Biomasse betreiben zu können ist in der den Druckbehälter ausbildenden Rohrleitung 49 eine Fördereinrichtung 69, vorliegend eine eine Schneckenwendel 69 aufweisende Förderschnecke mit einem externen Langsamläufer-Motor als Antrieb integriert. Das Füllgut aus Biomasse, Wasser und Katalysator wird durch Drehung der Schneckenwendel im Druckbehälter zur Auslassöffnung 58 des Druckbehälters 49 transportiert. Die Drehgeschwindigkeit der Förderschnecke ist steuerbar und darüber auch der Prozessverlauf der erfindungsgemäßen Umwandlung. Die Schneckenwendel ist vorliegend im wesentlichen bündig an den Innenquerschnitt der Rohrleitung 49 des Druckbehälters 49 angepasst.

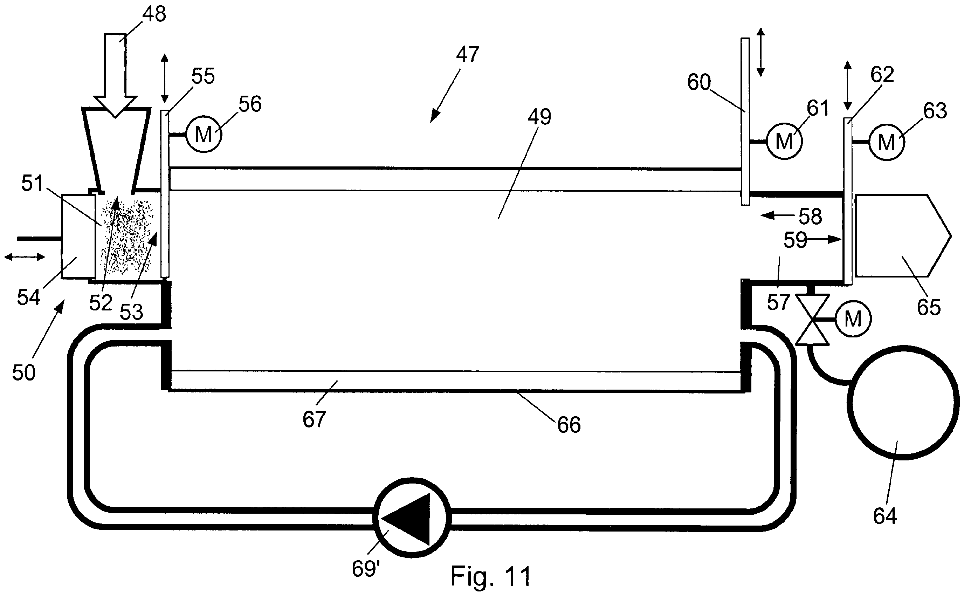

Das in Fig. 11 dargestellte Ausführungsbeispiel einer erfindungsgemäßen Vorrichtung 47 zur hydrothermalen Karbonisierung von Biomasse in einem kontinuierlichen Betrieb entspricht im Aufbau und der Funktionsweise im wesentlichen dem in Fig. 8 dargestellten und vorstehend beschriebenen Ausführungsbeispiel und unterscheidet sich von dem in Fig. 10 dargestellten Ausführungsbeispiel durch die eingesetzte Fördereinrichtung 69' zur Unterstützung des Transports der Biomasse durch den Druckbehälter 49. Bei dem in Fig. 11 dargestellten Ausführungsbeispiel ist die Fördereinrichtung 69' durch eine steuerbare Pumpe ausgebildet, welche den Druckgradienten zwischen Einlassöffnung und Auslassöffnung des Druckbehälters geregelt steuert, insbesondere unter Berücksichtigung der für den Umwandlungsprozess einzuhaltenden Druckverhältnisse.

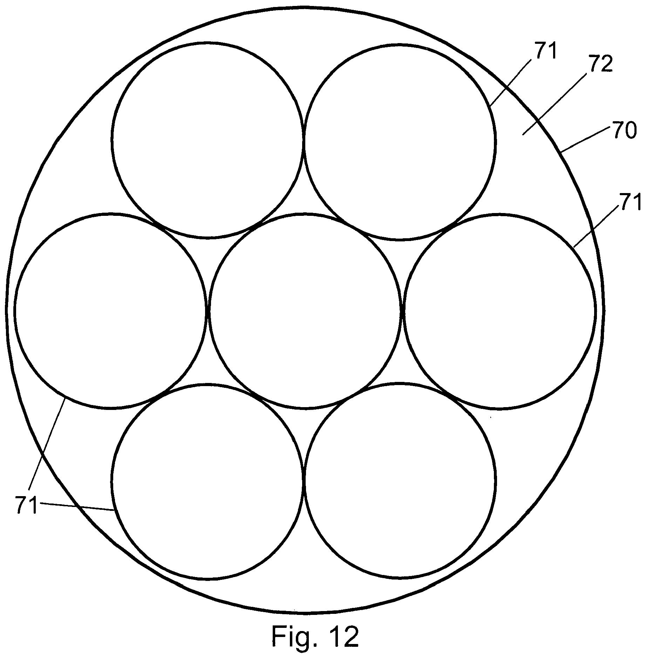

Bei dem in Fig. 12 in einer schematischen Seitenansicht dargestellten Ausführungsbeispiel eines erfindungsgemäßen Druckbehälters einer erfindungsgemäßen Vorrichtung zur hydrothermalen Karbonisierung von Biomasse in einem kontinuierlichen Betrieb ist die den Druckbehälter bildende Rohrleitung als ein in einem Großrohr 70 angeordnetes Rohrpaket aus vorliegend insgesamt sieben einzelnen Rohren 71 angeordnet beziehungsweise eingelassen. Das Großrohr 70 dient dabei gleichzeitig als Behälter für das Wärmeübertragungsmedium. Durch diesen konstruktiven Aufbau kann die erfindungsgenmäße Vorrichtung vorteilhafterweise transportabel ausgeführt werden.

Die in den Figuren der Zeichnung dargestellten und im Zusammenhang mit diesen beschriebenen Ausführungsbeispiele der Erfindung dienen lediglich der Erläuterung der Erfindung und sind für diese nicht beschränkend.

### Bezugszeichenliste:

- 1: Füllgut (Biomasse, Wasser und/oder Katalysator)
- 2: Druckbehälter (Startbehälter)
- 3: Absperrorgan
- 4: Druckbehälter (Folgebehälter 1)
- 5: Absperrorgan
- 6: Druckbehälter (Folgebehälter 2)
- 7: Absperrorgan
- 8: Druckbehälter (Folgebehälter n)
- 9: Absperrorgan
- 10: Reaktionsprodukt (Kohleschlamm)
- 11: Pumpe
- 12: Füllgut (Biomasse, Wasser und/oder Katalysator)
- 13: Druckbehälter/Rohrleitung (gerade)
- 13': Druckbehälter/Rohrleitung (gebogen)
- 14: Absperrorgan (Einlassöffnung)
- 15: Absperrorgan (Auslassöffnung)
- 16: Reaktionsprodukt (Kohleschlamm)
- 17: Vorrichtung zur hydrothermalen Karbonisierung von Biomasse
- 18: Druckbehälter/Rohrleitung (inneres Rohr)
- 19: Behälter/Rohrleileitung (äußeres Rohr)
- 20: Flansch
- 21: Flansch
- 22: Kompensator
- 23: Stabilisierung/Stabilisierungsrippe
- 24: Stütz-/Aufstelllager
- 25: Wärmedämmung
- 26: Vorrichtung zur hydrothermalen Karbonisierung von Biomasse
- 27: Flansch
- 28: Flansch
- 29: Druckbehälter/Rohrleitung
- 30: Behälter
- 31: Wärmeübertragungsmedium/Bio-/Thermoöl
- 32: Schleusenkammer
- 33: Schieber
- 34: Stellorgan/Antrieb (Schieber (33))
- 35: Schieber
- 36: Stellorgan/Antrieb (Schieber (35))
- 37: Nachfülllager/Trichter
- 38: Füllgut (Biomasse, Wasser und/oder Katalysator)
- 38': Füllgut (Biomasse, Wasser und/oder Katalysator) in Schleusenkammer (32)
- 39: Druckausgleich/Druckausgleichleitung
- 40: Druckerhöhung/Pumpe
- 41: Excenterschneckenpumpe 41 mit integrierter Druckregelung (42)
- 42: Druckregelung (Excenterschneckenpumpe (41))
- 43: Druckbehälter/Rohrleitung
- 44: Regelkreis
- 45: Regelorgan
- 46: Reaktionsprodukt (in Wasser gelöste Kohle in feinverteilter, kugelförmiger Form)
- 47: Vorrichtung zur hydrothermalen Karbonisierung von Biomasse
- 48: Füllgut (Biomasse, Wasser und/oder Katalysator)
- 49: Druckbehälter/Rohrleitung
- 49': Druckbehälter/Rohrleitung
- 50: Kolben-Presseinrichtung
- 51: Kammer/Kolbenkammer
- 52: Einlassöffnung (Kammer (51))
- 53: Auslassöffnung (Kammer (51))
- 54: Kolben
- 55: Schieber
- 56: Stellorgan/Antrieb (Schieber (55))
- 57: Kammer/Schleusenkammer
- 58: Einlassöffnung (Kammer (57))
- 59: Auslassöffnung (Kammer (57))
- 60: Schieber
- 61: Stellorgan/Antrieb (Schieber (60))
- 62: Schieber
- 63: Stellorgan/Antrieb (Schieber (62))
- 64: steuerbarer Druckausgleichbehälter
- 65: Entnahme Reaktionsprodukt
- 66: Behälter/Rohrleitung
- 66': Behälter
- 67: Wärmeübertragungsmedium/Bio-/Thermoöl
- 68: Rückfluss- und/oder Auftriebssperre
- 69: Fördereinrichtung/Förderschnecke/Schneckenwendel
- 69': Fördereinrichtung/Pumpe
- 70: Großrohr
- 71: Rohr/Rohrpaket
- 72: Wärmeübertragungsmedium/Bio-/Thermoöl

## Patentansprüche

1. Verfahren zur hydrothermalen Karbonisierung von Biomasse,
wobei
Biomasse mit Wasser und wenigstens einem Katalysator in einem Druckbehälter durch Temperatur- und/oder Druckerhöhung in Stoffe wie Kohle, Öl und/oder dergleichen artverwandte Stoffe umgewandelt wird, **dadurch gekennzeichnet, dass**
einem
als Rohrleitung
mit
wenigstens einer steuerbaren Einlassöffnung
und
wenigstens einer steuerbaren Auslassöffnung
ausgebildeten
Druckbehälter
über die wenigstens eine steuerbare Einlassöffnung
kontinuierlich, mitunter auch in Intervallen
Biomasse, Wasser und wenigstens ein Katalysator zugeführt wird,
die als Druckbehälter ausgebildete Rohrleitung beheizt wird, wobei die Rohrleitung zumindest teilweise in einem mit wenigstens einem Wärmeübertragungsmedium, vorzugsweise Öl, füllbaren Behältnis angeordnet ist und die Beheizung der als Druckbehälter ausgebildeten Rohrleitung über die Temperatur des wenigstens einen Wärmeübertragungsmediums in dem Behältnis gesteuert wird,
die Temperatur- und/oder Druckverhältnisse in dem als Rohrleitung ausgebildeten Druckbehälter derart gesteuert werden, dass dem als Rohrleitung ausgebildeten Druckbehälter zugeführtes Füllgut aus Biomasse, Wasser und Katalysator in der bzw. durch die Rohrleitung transportiert wird,
wobei
Biomasse, Wasser und Katalysator des Füllguts in der Rohrleitung in einem Umwandlungsprozess miteinander reagieren und eine Masse-Schicht während des Umwandlungsprozesses die Rohrleitung durchwandert,
derart, dass dabei zu jedem Zeitpunkt an unterschiedlichen Stellen entlang der Rohrleitung die zum jeweiligen Zeitpunkt des Umwandlungsprozesses entsprechend vorliegenden Zwischenprodukte vorhanden sind,
wobei die zeitliche Dauer der Prozessführung in Verbindung mit der Füllmenge an Biomasse, Wasser und Katalysator über die Länge und dem Durchmesser der Rohrleitung bestimmt wird,
der Transport von sich in dem als Rohrleitung ausgebildeten Druckbehälter befindlichem Füllgut unterstützt wird durch eine in der Rohrleitung des Druckbehälters angeordnete, sich im Wesentlichen über die gesamte Länge der Rohrleitung des Druckbehälters erstreckende und im Wesentlichen bündig an den Innenquerschnitt der Rohrleitung des Druckbehälters angepasste, steuerbare Fördereinrichtung in Form einer steuerbaren Förderschnecke, deren Fördervolumen über eine Regeleinrichtung steuerbar ist,
und
über die wenigstens eine steuerbare Auslassöffnung kontinuierlich, mitunter auch in Intervallen wenigstens ein Reaktionsprodukt des Füllguts entnommen wird.

2. Verfahren nach Anspruch 1, **dadurch gekennzeichnet, dass** die Zuführung von Biomasse, Wasser und wenigstens einem Katalysator über wenigstens eine vor der wenigstens einen steuerbaren Einlassöffnung des als Rohrleitung ausgebildeten Druckbehälters angeordnete, wenigstens eine steuerbare Einlassöffnung und wenigstens eine steuerbare Auslassöffnung aufweisende Schleusenkammer erfolgt, wobei die Schleusenkammer seitens der wenigstens einen steuerbaren Einlassöffnung mit wenigstens einem Vorratsspeicher an Biomasse, Wasser und wenigstens einem Katalysator und seitens der wenigstens einen steuerbaren Auslassöffnung mit der wenigstens einen steuerbaren Einlassöffnung des als Rohrleitung ausgebildeten Druckbehälters verbindbar ist,
wobei der Transport von Biomasse, Wasser und wenigstens einem Katalysator aus der Schleusenkammer in den als Rohrleitung ausgebildeten Druckbehälter durch Druckbeaufschlagung erfolgt.

3. Verfahren nach Anspruch 1 oder Anspruch 2, **dadurch gekennzeichnet, dass** die Zuführung von Biomasse, Wasser und wenigstens einem Katalysator über eine vor der wenigstens einen steuerbaren Einlassöffnung des als Rohrleitung ausgebildeten Druckbehälters angeordnete Kolben-Presseinrichtung erfolgt, wobei die Kolben-Presseinrichtung eine Kammer mit wenigstens einer Einlassöffnung, wenigstens einer steuerbaren Auslassöffnung und einem in der Kammer bewegbaren Kolben zum Pressen von in der Kammer befindlichem Gut aufweist,
wobei der Transport von Biomasse, Wasser und wenigstens einem Katalysator aus der Kammer in den als Rohrleitung ausgebildeten Druckbehälter durch mittels des Kolbens aufgebauter Druckbeaufschlagung erfolgt.

4. Verfahren nach einem der Ansprüche 1 bis 3, **dadurch gekennzeichnet, dass** die Zuführung von Biomasse, Wasser und wenigstens einem Katalysator über eine vor der wenigstens einen steuerbaren Einlassöffnung des als Rohrleitung ausgebildeten Druckbehälters angeordnete Excenterschneckenpumpe mit Druckregelung erfolgt.

5. Verfahren nach einem der Ansprüche 1 bis 4, **dadurch gekennzeichnet, dass** die Temperatur- und/oder Druckverhältnisse in dem als Rohrleitung ausgebildeten Druckbehälter über die wenigstens eine steuerbare Einlassöffnung und/oder die wenigstens eine steuerbare Auslassöffnung gesteuert werden über wenigstens eine Regeleinrichtung.

6. Verfahren nach einem der Ansprüche 1 bis 5, **gekennzeichnet durch** Verwendung eines Eindickmittels, vorzugsweise Speisestärke wie Getreide und/oder Kartoffelstärke, für das Füllgut aus Biomasse, Wasser und wenigstens einem Katalysator.

7. Verfahren nach einem der Ansprüche 1 bis 6, **dadurch gekennzeichnet, dass** die Entnahme des wenigstens einen Reaktionsprodukts des Füllguts über eine nach der wenigstens einen steuerbaren Auslassöffnung des als Rohrleitung ausgebildeten Druckbehälters angeordnete Trenneinrichtung durch Filterung erfolgt.

8. Verfahren nach einem der Ansprüche 1 bis 7, **dadurch gekennzeichnet, dass** das Reaktionsprodukt vor und/oder nach der Entnahme gepresst wird.

9. Verfahren nach einem der Ansprüche 1 bis 8, **dadurch gekennzeichnet, dass** die Zuführung von Biomasse, Wasser und wenigstens einem Katalysator, die Temperatur- und/oder Druckverhältnisse in dem als Rohrleitung ausgebildeten Druckbehälter, der Transport des Füllguts durch den des als Rohrleitung ausgebildeten Druckbehälter und/oder die Entnahme des wenigstens einen Reaktionsprodukts des Füllguts aus dem des als Rohrleitung ausgebildeten Druckbehälter über eine Regelung erfolgt.

10. Verfahren nach einem der Ansprüche 1 bis 9, **dadurch gekennzeichnet, dass** die Temperatur in dem als Rohrleitung ausgebildeten Druckbehälter zumindest über die zeitliche Dauer des Transports des Füllguts durch den als Rohrleitung ausgebildeten Druckbehälter konstant gehalten wird.

11. Verfahren nach einem der Ansprüche 1 bis 10, **dadurch gekennzeichnet, dass** die Temperatur in dem als Rohrleitung ausgebildeten Druckbehälter zumindest über die zeitliche Dauer des Transports des Füllguts durch den als Rohrleitung ausgebildeten Druckbehälter in einem Bereich zwischen 140,00 Grad Celsius bis 240,00 Grad Celsius, vorzugsweise zwischen 180,00 Grad Celsius bis 200,00 Grad Celsius, gehalten wird.

12. Vorrichtung zur hydrothermalen Karbonisierung von Biomasse, wobei Biomasse mit Wasser und wenigstens einem Katalysator in einem Druckbehälter durch Temperatur- und/oder Druckerhöhung in Stoffe wie Kohle, Öl und/oder dergleichen artverwandte Stoffe umgewandelt wird, **dadurch gekennzeichnet, dass**
der Druckbehälter
als Rohrleitung
mit wenigstens einer steuerbaren Einlassöffnung und
wenigstens einer steuerbaren Auslassöffnung
ausgebildet ist,
die Rohrleitung zumindest teilweise in einem mit wenigstens einem Wärmeübertragungsmedium, vorzugsweise Öl, füllbaren Behältnis angeordnet ist,
wenigstens eine steuerbare Heizeinrichtung zur Regelung der Temperatur in dem als Rohrleitung ausgebildeten Druckbehälter vorgesehen ist, wobei die Temperatur des Wärmeübertragungsmediums in dem Wärmeübertragungsmedium-Behältnis über die Heizeinrichtung steuerbar ist, derart,
dass dem als Rohrleitung ausgebildeten Druckbehälter zugeführtes Füllgut aus Biomasse, Wasser und Katalysator in der bzw. durch die Rohrleitung transportierbar ist,
wobei
Biomasse, Wasser und Katalysator des Füllguts in der Rohrleitung in einem Umwandlungsprozess miteinander reagieren und eine Masse-Schicht während des Umwandlungsprozesses die Rohrleitung durchwandert,
derart, dass dabei zu jedem Zeitpunkt an unterschiedlichen Stellen entlang der Rohrleitung die zum jeweiligen Zeitpunkt des Umwandlungsprozesses entsprechend vorliegenden Zwischenprodukte vorhanden sind,
wobei die zeitliche Dauer der Prozessführung in Verbindung mit der Füllmenge an Biomasse, Wasser und Katalysator über die Länge und dem Durchmesser der Rohrleitung bestimmt wird, wobei
der Transport von sich in dem als Rohrleitung ausgebildeten Druckbehälter befindlichem Füllgut unterstützbar ist durch eine in der Rohrleitung angeordnete, sich im Wesentlichen über die gesamte Länge der Rohrleitung erstreckende und im Wesentlichen bündig an den Innenquerschnitt der Rohrleitung angepasste, steuerbare Fördereinrichtung in Form einer steuerbaren Förderschnecke, deren Fördervolumen über eine Regeleinrichtung steuerbar ist.

13. Vorrichtung nach Anspruch 12, **dadurch gekennzeichnet, dass** die Rohrleitung zwischen der wenigstens einen Einlassöffnung und der wenigstens einen Auslassöffnung wenigstens eine Biegung aufweist, vorzugsweise wenigstens eine im wesentlichen U-förmige Biegung.

14. Vorrichtung nach Anspruch 12 oder Anspruch 13, **gekennzeichnet durch** wenigstens eine vor der wenigstens einen steuerbaren Einlassöffnung des als Rohrleitung ausgebildeten Druckbehälters angeordnete Schleusenkammer zur Zuführung von Biomasse, Wasser und wenigstens einem Katalysator durch die wenigstens eine steuerbare Einlassöffnung des als Rohrleitung ausgebildeten Druckbehälters, aufweisend wenigstens eine steuerbare Einlassöffnung und wenigstens eine steuerbare Auslassöffnung,
wobei die Schleusenkammer seitens der wenigstens einen steuerbaren Einlassöffnung mit wenigstens einem Vorratsspeicher an Biomasse, Wasser und wenigstens einem Katalysator und seitens der wenigstens einen steuerbaren Auslassöffnung mit der wenigstens einen steuerbaren Einlassöffnung des als Rohrleitung ausgebildeten Druckbehälters verbindbar ist,
die steuerbare Einlassöffnung des Druckbehälters die steuerbare Auslassöffnung der Schleusenkammer bildet, und
wenigstens eine Pumpe zur steuerbaren und/oder regelbaren Druckbeaufschlagung der Schleusenkammer vorgesehen ist.

15. Vorrichtung nach einem der Ansprüche 12 bis 14, **gekennzeichnet durch** eine vor der wenigstens einen steuerbaren Einlassöffnung des als Rohrleitung ausgebildeten Druckbehälters angeordnete Kolben-Presseinrichtung zur Zuführung von Biomasse, Wasser und wenigstens einem Katalysator durch die wenigstens eine steuerbare Einlassöffnung des als Rohrleitung ausgebildeten Druckbehälters, aufweisend eine Kammer mit wenigstens einer Einlassöffnung, wenigstens einer steuerbaren Auslassöffnung und einem in der Kammer bewegbaren Kolben zum Pressen von in der Kammer befindlichem Gut.

16. Vorrichtung nach einem der Ansprüche 12 bis 15, **gekennzeichnet durch** eine vor der wenigstens einen steuerbaren Einlassöffnung des als Rohrleitung ausgebildeten Druckbehälters angeordnete Excenterschneckenpumpe mit Druckregelung zur Zuführung von Biomasse, Wasser und wenigstens einem Katalysator durch die wenigstens eine steuerbare Einlassöffnung des als Rohrleitung ausgebildeten Druckbehälters.

17. Vorrichtung nach einem der Ansprüche 12 bis 16, **gekennzeichnet durch** wenigstens eine Regeleinrichtung zur zumindest teilautomatischen Steuerung der Temperatur- und/oder Druckverhältnisse in dem als Rohrleitung ausgebildeten Druckbehälter über die wenigstens eine steuerbare Einlassöffnung und/oder die wenigstens eine steuerbare Auslassöffnung.

18. Vorrichtung nach einem der Ansprüche 12 bis 17, **gekennzeichnet durch** wenigstens eine nach der wenigstens einen steuerbaren Auslassöffnung des als Rohrleitung ausgebildeten Druckbehälters angeordnete Trenneinrichtung, über welche die Entnahme des wenigstens einen Reaktionsprodukts des Füllguts erfolgt.

19. Vorrichtung nach einem der Ansprüche 12 bis 18, **gekennzeichnet durch** wenigstens eine Regeleinrichtung zur zumindest teilautomatischen Steuerung der Zuführung von Biomasse, Wasser und wenigstens einem Katalysator, der Temperatur- und/oder Druckverhältnisse in dem als Rohrleitung ausgebildeten Druckbehälter, des Transports des Füllguts durch den als Rohrleitung ausgebildeten Druckbehälter und/oder der Entnahme des wenigstens einen Reaktionsprodukts des Füllguts aus dem als Rohrleitung ausgebildeten Druckbehälter.

20. Vorrichtung nach einem der Ansprüche 12 bis 19, **dadurch gekennzeichnet, dass** diese ausgebildet und/oder eingerichtet ist, die Verfahrensschritte eines Verfahrens nach einem der Ansprüche 1 bis 11 auszuführen.

## Claims

1. A method for the hydrothermal carbonization of biomass,
wherein
biomass with water and at least one catalyst is converted into substances, such as carbon, oil and/or similar related substances in a pressure vessel by increasing the temperature and/or pressure,
**characterized in that**
a pressure vessel configured as
a pipe
comprising
at least one controllable inlet port
and
at least one controllable outlet port
will be continuously, sometimes also at intervals,
supplied with biomass, water and at least one catalyst
via the at least one controllable inlet port,
the pipe configured as pressure vessel will be heated, wherein the pipe is at least partially arranged in a container that can be filled with at least one heat transfer medium, preferably oil, and the heating of the pipe configured as pressure vessel will be controlled by means of the temperature of the at least one heat transfer medium in the container,
the temperature and/or pressure conditions in the pressure vessel configured as a pipe will be controlled such that filling material composed of biomass, water and a catalyst which is supplied to the pressure vessel configured as a pipe will be transported in or through the pipe,
wherein biomass, water and a catalyst as filling material in the pipe will react with each other in a conversion process
and a mass layer will pass through the pipe during the conversion process, such that at any time the intermediate products that are correspondingly present at the respective point of time of the conversion process will be there at different positions along the pipe,
wherein the temporal duration of the process will be determined in connection with the filling amount of biomass, water and catalyst over the length and the diameter of the pipe,
the transport of the filling material that is present in the pressure vessel configured as a pipe will be supported by means of a controllable conveyor system in form of a controllable screw conveyor, the flow volume of which is controllable by means of a control device, the conveyor system being arranged in the pipe of the pressure vessel, extending essentially over the entire length of the pipe of the pressure vessel and being adapted in a flush manner to the inner cross section of the pipe of the pressure vessel,
and
at least one reaction product of the filling material will be removed continuously, sometimes also at intervals, via the at least one controllable outlet port.

2. A method according to claim 1, **characterized in that** the supply of biomass, water and at least one catalyst will take place via at least one lock chamber which is arranged before the at least one controllable inlet port of the pressure vessel configured as a pipe and which comprises at least one controllable inlet port and at least one controllable outlet port, wherein the lock chamber can be connected by means of the at least one controllable inlet port to at least one storage tank of biomass, water and at least one catalyst and by means of the at least one controllable outlet port to the at least one controllable inlet port of the pressure vessel configured as a pipe, wherein the transport of biomass, water and at least one catalyst from the lock chamber into the pressure vessel configured as a pipe will be conducted by means of pressurization.

3. A method according to claim 1 or claim 2, **characterized in that** the supply of biomass, water and at least one catalyst will take place via a piston-pressing device which is arranged before the at least one controllable inlet port of the pressure vessel configured as a pipe, wherein the piston-pressing device comprises a chamber having at least one inlet port, at least one controllable outlet port and a piston movable in the chamber for pressing material that is present in the chamber,
wherein the transport of biomass, water and at least one catalyst from the chamber into the pressure vessel configured as a pipe will take place by means of pressurization built up by means of the piston.

4. A method according to one of the claims 1 to 3, **characterized in that** the supply of biomass, water and at least one catalyst will take place via an eccentric screw pump comprising a pressure control and being arranged before the at least one controllable inlet port of the pressure vessel configured as a pipe.

5. A method according to one of the claims 1 to 4, **characterized in that** the temperature and/or pressure conditions in the pressure vessel configured as a pipe will be controlled via the at least one controllable inlet port and/or the at least one controllable outlet port by means of at least one control device.

6. A method according to one of the claims 1 to 5, **characterized by** the use of a thickener, preferably starch, such as cereal and/or potato starch, for the filling material of biomass, water and at least one catalyst.

7. A method according to one of the claims 1 to 6, **characterized in that** the removal of the at least one reaction product of the filling material will take place by means of a separation unit using filtration and being arranged behind the at least one controllable outlet port of the pressure vessel configured as a pipe.

8. A method according to one of the claims 1 to 7, **characterized in that** the reaction product will be pressed before and/or after the removal.

9. A method according to one of the claims 1 to 8, **characterized in that** the supply of biomass, water and at least one catalyst, the temperature and/or pressure conditions in the pressure vessel configured as a pipe, the transport of the filling material through the pressure vessel configured as a pipe and/or the removal of the at least one reaction product of the filling material from the pressure vessel configured as a pipe will be managed by means of a control.

10. A method according to one of the claims 1 to 9, **characterized in that** the temperature in the pressure vessel configured as a pipe will be kept constant at least during the temporal duration of the transport of the filling material through the pressure vessel configured as a pipe.

11. A method according to one of the claims 1 to 10, **characterized in that** the temperature in the pressure vessel configured as a pipe will be kept within a range comprised between 140,00 degrees Celsius and 240,00 degrees Celsius, preferably between 180,00 degrees Celsius and 200,00 degrees Celsius at least during the temporal duration of the transport of the filling material through the pressure vessel configured as a pipe.

12. A device for the hydrothermal carbonization of biomass, wherein biomass with water and at least one catalyst is converted into substances, such as carbon, oil and/or similar related substances in a pressure vessel by increasing the temperature and/or pressure,
**characterized in that**
the pressure vessel is configured as
a pipe
comprising at least one controllable inlet port and
at least one controllable outlet port,
will be continuously, sometimes also at intervals,
the pipe is at least partially arranged in a container that can be filled with at least one heat transfer medium, preferably oil,
at least one controllable heating device is provided for regulating the temperature in the pressure vessel configured as a pipe,
wherein the temperature of the heat transfer medium in the heat transfer medium container can be controlled by means of the heating device, such that
filling material composed of biomass, water and catalyst supplied to the pressure vessel configured as a pipe can be transported in or through the pipe,
wherein
biomass, water and a catalyst as filling material in the pipe will react with each other in a conversion process
and a mass layer will pass through the pipe during the conversion process, such that at any time the intermediate products that are correspondingly present at the respective point of time of the conversion process will be there at different positions along the pipe,
wherein the temporal duration of the process will be determined in connection with the filling amount of biomass, water and catalyst over the length and the diameter of the pipe,
wherein
the transport of the filling material that is present in the pressure vessel configured as a pipe can be supported by means of a controllable conveyor system in form of a controllable screw conveyor, the flow volume of which is controllable by means of a control device, the conveyor system being arranged in the pipe, extending essentially over the entire length of the pipe and being adapted in a flush manner to the inner cross section of the pipe.

13. A device according to claim 12, **characterized in that** the pipe comprises at least one curvature, preferably at least one essentially U-shaped curvature, between the at least one inlet port and the at least one outlet port.

14. A device according to claim 12 or claim 13, **characterized by** at least one lock chamber which is arranged before the at least one controllable inlet port of the pressure vessel configured as a pipe for supplying biomass, water and at least one catalyst through the at least one controllable inlet port of the pressure vessel configured as a pipe, comprising at least one controllable inlet port and at least one controllable outlet port,
wherein the lock chamber can be connected by means of the at least one controllable inlet port to at least one storage tank of biomass, water and at least one catalyst and by means of the at least one controllable outlet port to the at least one controllable inlet port of the pressure vessel configured as a pipe,
the controllable inlet port of the pressure vessel forming the controllable outlet port of the lock chamber, and
at least one pump being provided for the controllable and/or adjustable pressurization of the lock chamber.

15. A device according to one of the claims 12 to 14, **characterized by** a piston-pressing device for the supply of biomass, water and at least one catalyst via the at least one controllable inlet port of the pressure vessel configured as a pipe, which piston-pressing device is arranged before the at least one controllable inlet port of the pressure vessel configured as a pipe, the piston-pressing device comprising a chamber having at least one inlet port, at least one controllable outlet port and a piston movable in the chamber for pressing material that is present in the chamber.

16. A device according to one of the claims 12 to 15, **characterized by** an eccentric screw pump comprising a pressure control for the supply of biomass, water and at least one catalyst through the at least one controllable inlet port of the pressure vessel configured as a pipe and being arranged before the at least one controllable inlet port of the pressure vessel configured as a pipe.

17. A device according to one of the claims 12 to 16, **characterized by** at least one control device for the at least semi-automatic control of the temperature and/or pressure conditions in the pressure vessel configured as a pipe via the at least one controllable inlet port and/or the at least one controllable outlet port.

18. A device according to one of the claims 12 to 17, **characterized by** at least one separation unit arranged behind the at least one controllable outlet port of the pressure vessel configured as a pipe, by means of which separation unit the removal of the at least one reaction product of the filling material will be carried out.

19. A device according to one of the claims 12 to 18, **characterized by** at least one control device for the at least semi-automatic control of the supply of biomass, water and at least one catalyst, the temperature and/or pressure conditions in the pressure vessel configured as a pipe, the transport of the filling material through the pressure vessel configured as a pipe and/or the removal of the at least one reaction product of the filling material from the pressure vessel configured as a pipe.

20. A device according to one of the claims 12 to 19, **characterized in that** this one is configured and/or adapted to carry out the process steps of a method according to one of the claims 1 to 11.

## Revendications

1. Procédé de carbonisation hydrothermale de biomasse,
dans lequel
la biomasse est convertie en substances, telles que le charbon, le pétrole et/ou des substances similaires apparentées, avec de l'eau et au moins un catalyseur dans un récipient sous pression en augmentant la température et/ou la pression,
**caractérisé en ce qu'**
un récipient sous pression
configuré
comme une conduite
comprenant
au moins un orifice d'admission commandable
et
au moins un orifice de sortie commandable
est continûment, parfois aussi à des intervalles,
alimenté en biomasse, en eau et en au moins un catalyseur par l'au moins un orifice d'admission commandable,
la conduite configurée comme récipient sous pression est chauffée, la conduite étant au moins partiellement disposée dans un récipient susceptible d'être rempli avec au moins un agent de transfert thermique, de préférence de l'huile, et le chauffage de la conduite configurée comme récipient sous pression étant commandé par moyen de la température de l'au moins un agent de transfert thermique dans le récipient,
les conditions de température et/ou de pression dans le récipient sous pression configuré comme une conduite sont commandées de sorte que le matériau de remplissage composé de la biomasse, de l'eau et du catalyseur et amené au récipient sous pression configuré comme une conduite est transporté dans ou à travers la conduite,
dans lequel
la biomasse, l'eau et le catalyseur du matériau de remplissage réagissent les uns avec les autres dans la conduite dans un processus de transformation et une couche de masse passe à travers la conduite pendant le processus de transformation,
de sorte qu'à chaque instant des produits intermédiaires présents conformément à l'instant respectif du processus de transformation se trouvent à des positions différentes le long de la conduite,
la durée du processus étant déterminée en rapport avec la quantité de remplissage de la biomasse, de l'eau et du catalyseur sur la longueur et le diamètre de la conduite,
le transport du matériau de remplissage se trouvant dans le récipient sous pression configuré comme une conduite est soutenu par un système de convoyeur commandable sous forme d'un convoyeur à vis commandable, dont le débit peut être commandé par moyen d'un dispositif de régulation, le système de convoyeur étant disposé dans la conduite du récipient sous pression, s'étendant essentiellement sur la longueur entière de la conduite et s'adaptant essentiellement de manière affleurant à la section transversale intérieure de la conduite du récipient sous pression,
et
au moins un produit de réaction du matériau de remplissage est enlevé continûment, parfois aussi à des intervalles, via l'au moins un orifice de sortie commandable.

2. Procédé selon la revendication 1, **caractérisé en ce que** l'alimentation en biomasse, en eau et en au moins un catalyseur se fait via au moins une chambre à écluse, qui est disposée devant l'au moins un orifice d'admission commandable du récipient sous pression configuré comme une conduite et qui comprend au moins un orifice d'admission commandable et au moins un orifice de sortie commandable, la chambre à écluse pouvant être reliée par moyen de l'au moins un orifice d'admission commandable à au moins un réservoir de stockage de la biomasse, de l'eau et d'au moins un catalyseur et par moyen de l'au moins un orifice de sortie à l'au moins un orifice d'admission commandable du récipient sous pression configuré comme une conduite, le transport de la biomasse, de l'eau et d'au moins un catalyseur à partir de la chambre à écluse dans le récipient sous pression configuré comme une conduite se faisant par moyen d'une pressurisation.

3. Procédé selon la revendication 1 ou la revendication 2, **caractérisé en ce que** l'alimentation en biomasse, en eau et en au moins un catalyseur se fait via un dispositif de pressage à piston, qui est disposé devant l'au moins un orifice d'admission commandable du récipient sous pression configuré comme une conduite, le dispositif de pressage à piston comprenant une chambre ayant au moins un orifice d'admission, au moins un orifice de sortie commandable et un piston déplaçable dans la chambre pour presser du matériau, qui se trouve dans la chambre, le transport de la biomasse, de l'eau et d'au moins un catalyseur à partir de la chambre dans le récipient sous pression configuré comme une conduite se faisant par moyen d'une pressurisation établie par le piston.

4. Procédé selon l'une des revendications 1 à 3, **caractérisé en ce que** l'alimentation en biomasse, en eau et en au moins un catalyseur se fait via une pompe à vis excentrique, qui comprend un réglage de pression et qui est disposée devant l'au moins un orifice d'admission du récipient sous pression configuré comme une conduite.

5. Procédé selon l'une des revendications 1 à 4, **caractérisé en ce que** les conditions de température et/ou de pression dans le récipient sous pression configuré comme une conduite sont commandées via l'au moins un orifice d'admission commandable et/ou via l'au moins un orifice de sortie commandable par moyen d'au moins un dispositif de régulation.

6. Procédé selon l'une des revendications 1 à 5, **caractérisé par** l'utilisation d'un épaississant, de préférence de la fécule, telle que la fécule de céréale et/ou la fécule de pomme de terre, pour le matériau de remplissage composé de la biomasse, de l'eau et d'au moins un catalyseur.

7. Procédé selon l'une des revendications 1 à 6, **caractérisé en ce que** l'enlèvement de l'au moins un produit de réaction du matériau de remplissage se fait par moyen d'un dispositif de séparation utilisant un filtrage et disposé derrière l'au moins un orifice de sortie commandable du récipient sous pression configuré comme une conduite

8. Procédé selon l'une des revendications 1 à 7, **caractérisé en ce que** le produit de réaction est pressé avant et/ou après l'enlèvement.

9. Procédé selon l'une des revendications 1 à 8, **caractérisé en ce que** l'alimentation en biomasse, en eau et en au moins un catalyseur, les conditions de température et/ou de pression dans le récipient sous pression configuré comme une conduite, le transport du matériau de remplissage à travers le récipient sous pression configuré comme une conduite et/ou l'enlèvement du moins un produit de réaction du matériau de remplissage du récipient sous pression configuré comme une conduite sont gérés par un dispositif de régulation.

10. Procédé selon l'une des revendications 1 à 9, **caractérisé en ce que** la température dans le récipient sous pression configuré comme une conduite est maintenue constante au moins pendant la durée du transport du matériau de remplissage à travers le récipient sous pression configuré comme une conduite.

11. Procédé selon l'une des revendications 1 à 10, **caractérisé en ce que** la température dans le récipient sous pression configuré comme une conduite est maintenue dans une gamme comprise entre 140,00 degrés Celsius et 240,00 degrés Celsius, de préférence entre 180,00 degrés Celsius et 200,00 degrés Celsius au moins pendant la durée du transport du matériau de remplissage à travers le récipient sous pression configuré comme une conduite.

12. Dispositif de carbonisation hydrothermale de biomasse, dans lequel la biomasse est convertie en substances, telles que le charbon, le pétrole et/ou des substances similaires apparentées, avec de l'eau et au moins un catalyseur dans un récipient sous pression en augmentant la température et/ou la pression,
**caractérisé en ce que**
le récipient sous pression
est configuré
comme une conduite
comprenant au moins un orifice d'admission commandable et
au moins un orifice de sortie commandable,
la conduite est au moins partiellement disposée dans un récipient susceptible d'être rempli avec au moins un agent de transfert thermique, de préférence de l'huile,
au moins un dispositif de chauffage commandable pour régler la température dans le récipient sous pression configuré comme une conduite est prévu, dans lequel la température de l'agent de transfert thermique dans le conteneur d'agent de transfert thermique peut être commandée par moyen du dispsitif de chauffage, de sorte que
le matériau de remplissage composé de la biomasse, de l'eau et du catalyseur et amené au récipient sous pression configuré comme une conduite peut être transporté dans ou à travers la conduite,
dans lequel
la biomasse, l'eau et le catalyseur du matériau de remplissage réagissent les uns avec les autres dans la conduite dans un processus de transformation et une couche de masse passe à travers la conduite pendant le processus de transformation,
de sorte qu'à chaque instant des produits intermédiaires présents conformément à l'instant respectif du processus de transformation se trouvent à des positions différentes le long de la conduite,
la durée du processus étant déterminée en rapport avec la quantité de remplissage de la biomasse, de l'eau et du catalyseur sur la longueur et le diamètre de la conduite,
le transport du matériau de remplissage se trouvant dans le récipient sous pression configuré comme une conduite pouvant être soutenu par un système de convoyeur commandable sous forme d'un convoyeur à vis commandable, dont le débit peut être commandé par moyen d'un dispositif de régulation, le système de convoyeur étant disposé dans la conduite, s'étendant essentiellement sur la longueur entière de la conduite et s'adaptant essentiellement de manière affleurant à la section transversale intérieure de la conduite.

13. Dispositif selon la revendication 12, **caractérisé en ce que** la conduite comprend au moins une courbure, de préférence au moins une courbure essentiellement sous forme de U, entre l'au moins un orifice d'admission et l'au moins un orifice de sortie.

14. Dispositif selon la revendication 12 ou la revendication 13, **caractérisé par** au moins une chambre à écluse, qui est disposée devant l'au moins un orifice d'admission commandable du récipient sous pression configuré comme une conduite pour amener la biomasse, l'eau et au moins un catalyseur à travers l'au moins un orifice d'admission commandable du récipient sous pression configuré comme une conduite, comprenant au moins un orifice d'admission commandable et au moins un orifice de sortie commandable,
la chambre à écluse pouvant être reliée par moyen de l'au moins un orifice d'admission commandable à au moins un réservoir de stockage de la biomasse, de l'eau et d'au moins un catalyseur et par moyen de l'au moins un orifice de sortie à l'au moins un orifice d'admission commandable du récipient sous pression configuré comme une conduite,
l'orifice d'admission commandable du récipient sous pression format l'orifice de sortie commandable de la chambre à écluse, et
au moins une pompe étant prévue pour la pressurisation commandable et/ou réglable de la chambre à écluse.

15. Dispositif selon l'une des revendications 12 à 14, **caractérisé par** un dispositif de pressage à piston, qui est disposé devant l'au moins un orifice d'admission commandable du récipient sous pression configuré comme une conduite, pour amener la biomasse, l'eau et au moins un catalyseur à travers l'au moins un orifice d'admission commandable du récipient sous pression configuré comme une conduite, le dispositif de pressage à piston comprenant une chambre ayant au moins un orifice d'admission, au moins un orifice de sortie commandable et un piston déplaçable dans la chambre pour presser du matériau, qui se trouve dans la chambre.

16. Dispositif selon l'une des revendications 12 à 15, **caractérisé par** une pompe à vis excentrique, qui comprend un réglage de pression et qui est disposée devant l'au moins un orifice d'admission du récipient sous pression configuré comme une conduite pour amener la biomasse, l'eau et au moins un catalyseur à travers l'au moins un orifice d'admission commandable du récipient sous pression configuré comme une conduite.

17. Dispositif selon l'une des revendications 12 à 16, **caractérisé par** au moins un dispositif de régulation pour la commande au moins partiellement automatique des conditions de température et de pression dans le récipient sous pression configuré comme une conduite via l'au moins un orifice d'admission commandable et/ou via l'au moins un orifice de sortie commandable.

18. Dispositif selon l'une des revendications 12 à 17, **caractérisé par** au moins un dispositif de séparation disposé derrière l'au moins un orifice de sortie commandable du récipient sous pression configuré comme une conduite, via lequel dispositif de séparation l'au moins un produit de réaction du matériau de remplissage est enlevé.

19. Dispositif selon l'une des revendications 12 à 18, **caractérisé par** au moins un dispositif de régulation pour la commande au moins partiellement automatique de l'alimentation en biomasse, en eau et en au moins un catalyseur, des conditions de température et/ou de pression dans le récipient sous pression configuré comme une conduite, du transport du matériau de remplissage à travers le récipient sous pression configuré comme une conduite et/ou de l'enlèvement du moins un produit de réaction du matériau de remplissage du récipient sous pression configuré comme une conduite.

20. Dispositif selon l'une des revendications 12 à 19, **caractérisé en ce que** celui-ci est configuré et/ou adapté pour effectuer les étapes de procédé d'un procédé selon l'une des revendications 1 à 11.
